# EUROPEAN PATENT APPLICATION

(11) **EP 4 708 243 A1**
(43) Date of publication of application: **11.03.2026**
(21) Application number: 25193881.7
(22) Date of filing: 04.08.2025
(51) Int. Cl.: G08B 17/12

(54) **SYSTEM AND METHOD FOR IDENTIFYING A LOCATION OF A FLAME WITHIN A FIELD OF VIEW**

(30) Priority: 06.09.2024 IN 202411067581
(71) Applicant: Life Safety Distribution GmbH, 1180 Rolle (CH)
(72) Inventor: GANESH, Bindu Rani, Charlotte, 28202 (US)
(74) Representative: Haseltine Lake Kempner LLP

(57) **Abstract**

A flame detection system is disclosed. The flame detection system comprises one or more processors coupled to at least one flame detector and at least one image capturing device. The one or more processors identify a location of a flame by determining a base Y-coordinate, a tip Y-coordinate, a left-most X-coordinate, and a right-most X-coordinate of the plurality of pixels associated with the flame; determining that the base Y-coordinate of a most current image of the sequence of images varies less than a predefined limit of height of the flame; and determining that the tip Y-coordinate of the most current image of the sequence of images varies more than the predefined limit of height of the flame, or the left-most X-coordinate or the right-most X coordinate of the most current image of the sequence of images varies more than a predefined limit of width of the flame.

## Description

### TECHNOLOGICAL FIELD

Example embodiments of the present disclosure generally relates to a flame detection system, and more particularly relates to a system and method for identifying a location of a flame within a field of view (FoV).

### BACKGROUND

In flame detection systems, flame detectors are designed to identify the presence of a flame through various technologies such as infrared, ultraviolet, or visible light sensors. Existing flame detectors often fail to pinpoint the exact location of a flame source (e.g., indicate the location on a screen), making it difficult to identify where the fire is located when an alarm is triggered.

The inventors have identified numerous areas of improvement in the existing technologies and processes, which are the subjects of embodiments described herein. Through applied effort, ingenuity, and innovation, many of these deficiencies, challenges, and problems have been solved by developing solutions that are included in embodiments of the present disclosure, some examples of which are described in detail herein.

### BRIEF SUMMARY

The following presents a simplified summary in order to provide a basic understanding of some aspects of the present disclosure. This summary is not an extensive overview and is intended to neither identify key or critical elements nor delineate the scope of such elements. Its purpose is to present some concepts of the described features in a simplified form as a prelude to the more detailed description that is presented later.

In an example embodiment, a flame detection system is disclosed. The flame detection system comprises at least one flame detector configured to generate a data corresponding to detection of a presence of a flame within a field of view (FoV). The flame detection system further comprises at least one image capturing device operationally coupled to the at least one flame detector. The at least one image capturing device is configured to capture a sequence of images of the flame within the FoV. A plurality of pixels of each image of the sequence of images are associated with the flame within the FoV. Further, the flame detection system comprises one or more processors communicatively coupled to the at least one flame detector and the at least one image capturing device. The one or more processors are configured to identify a location of a flame within the FoV by determining a base Y-coordinate, a tip Y-coordinate, a left-most X-coordinate, and a right-most X-coordinate of the plurality of pixels associated with the flame within the FoV for each of the sequence of images. The one or more processors are configured to identify a location of the flame within the FoV by determining that the base Y-coordinate of a most current image of the sequence of images varies less than a predefined limit of height of the flame as compared to a previous image of the sequence of images. Further, the one or more processors are configured to identify a location of the flame within the FoV by determining that the tip Y-coordinate of the most current image of the sequence of images varies more than the predefined limit of height of the flame as compared to the previous image of the sequence of images, or the left-most X-coordinate or the right-most X coordinate of the most current image of the sequence of images varies more than a predefined limit of width of the flame as compared to the previous image of the sequence of images.

In some embodiments, the predefined limit of the height of the flame corresponds to 2% of the height of the flame and the predefined limit of the width of the flame corresponds to 2% of the width of the flame.

In some embodiments, the one or more processors are further configured to store the sequence of images in a rolling buffer for a predefined frame per second (FPS) within a memory. Further, the one or more processors are configured to determine whether the flame is present within an image of the sequence of images stored in the rolling buffer. Further, the one or more processors are configured to save the image of the sequence of images stored in the rolling buffer within the memory as a previous frame, upon determining the flame is present within the image of the sequence of images. The one or more processors are further configured to store another sequence of images received from the at least one image capturing device in the rolling buffer for the predefined FPS within the memory as a current frame.

In some embodiments, the predefined FPS defines a range of 30FPS to 60FPS.

In some embodiments, the one or more processors are configured to determine the base Y-coordinate, the tip Y-coordinate, the left-most X-coordinate, and the right-most X-coordinate by extracting red green blue (RGB) frames from the previous image and the most current image of the sequence of images. Further, the one or more processors are configured to determine the base Y-coordinate, the tip Y-coordinate, the left-most X-coordinate, and the right-most X-coordinate by splitting the RGB frame of the previous image and the most current image into an R channel, a G channel, and a B channel. Further, the one or more processors are configured to determine the base Y-coordinate, the tip Y-coordinate, the left-most X-coordinate, and the right-most X-coordinate by subtracting one or more pixels of the G channel from one or more pixels of the R channel. Further, the one or more processors are configured to determine the base Y-coordinate, the tip Y-coordinate, the left-most X-coordinate, and the right-most X-coordinate by determining that a difference of a pixel value between the R channel and the G channel is greater than 60. The one or more processors are configured to determine the base Y-coordinate, the tip Y-coordinate, the left-most X-coordinate, and the right-most X-coordinate by dilating the sequence of images from the previous frame and the current frame by adding the one or more pixels of the R channel within boundaries of the flame. Further, the one or more processors are configured to determine the base Y-coordinate, the tip Y-coordinate, the left-most X-coordinate, and the right-most X-coordinate by contouring the dilated sequence of images by joining the one or more pixels of the R channel.

In some embodiments, the plurality of pixels of the sequence of images corresponds to one or more pixels of the current frame and the one or more pixels of the previous frame.

In some embodiments, the data corresponds to an Infrared (IR) sensor data that is captured at a rate of 60 samples per second.

In some embodiments, the flame detection system is further configured to indicate on at least one image of the sequence of images the location of the flame within the FoV.

In another example embodiment, a flame detection system is disclosed. The flame detection system comprises at least one flame detector configured to generate a data corresponding to detection of a presence of a flame within a field of view (FoV). The flame detection system further comprises at least one image capturing device operationally coupled to the at least one flame detector, wherein the at least one image capturing device is configured to capture a sequence of images of the flame within the FoV. The plurality of pixels of each image of the sequence of images are associated with the flame within the FoV. The flame detection system further comprises one or more processors communicatively coupled to the at least one flame detector and the at least one image capturing device. The one or more processors are configured to identify a location of the flame within the FoV by determining a center pixel of the plurality of pixels associated with the flame within the FoV for at least one of the sequence of images. The one or more processors are further configured to identify a location of the flame within the FoV by determining an intensity of the center pixel and intensities of neighbouring pixels. The neighbouring pixels comprise a pixel that is to the left of the center pixel, a pixel that is to the right of the center pixel, a pixel that is directly below the center pixel, and a pixel that is directly above the center pixel. Further, the one or more processors are configured to identify a location of the flame within the FoV by determining that an intensity value of the center pixel is equal to the intensities of each of the neighbouring pixels.

In some embodiments, the one or more processors are further configured to determine coordinates for the center pixel of the plurality of pixels associated with the flame within the FoV for the at least one of the sequence of images by determining a vertical line between a tip Y-coordinate and a base Y-coordinate of the flame. Further, the one or more processors are configured to determine coordinates for the center pixel of the plurality of pixels associated with the flame within the FoV for the at least one of the sequence of images by determining a horizontal line between a left-most X-coordinate and a right-most X-coordinate of the flame. Further, the one or more processors are configured to determine coordinates for the center pixel of the plurality of pixels associated with the flame within the FoV for the at least one of the sequence of images by determining an intersection point of the vertical line and the horizontal line. The one or more processors may be further configured to determine coordinates for the center pixel of the plurality of pixels associated with the flame within the FoV for the at least one of the sequence of images by associating the intersection point as the center pixel.

In yet another example embodiment, a flame detection system is disclosed. The flame detection system comprises at least one flame detector configured to generate a data corresponding to detection of a presence of a flame within a field of view (FoV). The flame detection system further comprises at least one image capturing device operationally coupled to the at least one flame detector, wherein the at least one image capturing device is configured to capture a sequence of images of the flame within the FoV. The plurality of pixels of each image of the sequence of images are associated with the flame within the FoV. The flame detection system further comprises one or more processors communicatively coupled to the at least one flame detector and the at least one image capturing device. The one or more processors are configured to identify a location of the flame within the FoV by determining a flickering frequency of the at least one flame detector is equal to a flickering frequency of the sequence of images captured by the at least one image capturing device.

In some embodiments, the one or more processors are further configured to determine the flickering frequency of the at least one flame detector and the flickering frequency of the sequence of images by determining a single mean value of one or more pixels inside the contoured sequence of images for the predefined FPS. Further, the one or more processors are further configured to determine the flickering frequency of the at least one flame detector and the flickering frequency of the sequence of images by converting the single mean value into a frequency domain representation.

The above summary is provided merely for purposes of summarizing some example embodiments to provide a basic understanding of some aspects of the invention. Accordingly, it will be appreciated that the above-described embodiments are merely examples and should not be construed to narrow the scope or spirit of the invention in any way. It will be appreciated that the scope of the invention encompasses many potential embodiments in addition to those here summarized, some of which will be further described below.

### BRIEF DESCRIPTION OF THE DRAWINGS

Having thus described certain example embodiments of the present disclosure in general terms, reference will hereinafter be made to the accompanying drawings, which are not necessarily drawn to scale, and wherein:
FIG. 1 illustrates a block diagram of a flame detection system for identifying a location of a flame within a field of view (FoV) in accordance with an example embodiment of the present disclosure;
FIG. 2A illustrates integration of at least one flame detector and at least one image capturing device in the flame detection system in accordance with an example embodiment of the present disclosure;
FIG. 2B illustrates a suspected region in a sequence of images within the FoV in accordance with an example embodiment of the present disclosure;
FIG. 3A illustrates the sequence of images in a rolling buffer in accordance with an example embodiment of the present disclosure;
FIG. 3B illustrates addition of another image in the sequence of images in the rolling buffer in accordance with an example embodiment of the present disclosure;
FIG. 4 illustrates a flowchart showing a method to store a fire movie in a memory in accordance with an example embodiment of the present disclosure;
FIG. 5A illustrates an R channel, a G channel and a B channel of each of the sequence of images in accordance with a first embodiment of the present disclosure;
FIG. 5B illustrates subtraction of one or more pixels of the G channel from one or more pixels of the R channel in accordance with the first embodiment of the present disclosure;
FIG. 5C illustrates dilation of the sequence of images in accordance with the first embodiment of the present disclosure;
FIG. 5D illustrates contouring of the sequence of images in accordance with the first embodiment of the present disclosure;
FIG. 6 illustrates the flame in accordance with an example embodiment of the present disclosure;
FIG. 7A illustrates a base Y-coordinate, a tip Y-coordinate, a left-most X-coordinate, and a right-most X coordinate of a plurality of pixels associated with the flame within the FoV for a most current image and a previous image of the sequence of images in accordance with the first embodiment of the present disclosure;
FIG. 7B illustrates a table showing determination of a predefined limit of height of the flame and a predefined limit of width of the flame in accordance with the first embodiment of the present disclosure;
FIG. 8A illustrates a flowchart showing a method to contour the sequence of images in accordance with the first embodiment of the present disclosure;
FIG. 8B illustrates a flowchart showing a method to store the sequence of images in the memory as a previous frame in accordance with the first embodiment of the present disclosure;
FIG. 8C illustrates a flowchart showing a method to contour another sequence of images in accordance with the first embodiment of the present disclosure;
FIG. 8D illustrates a flowchart showing a method to store the sequence of images in the memory as a current frame in accordance with the first embodiment of the present disclosure;
FIG. 8E illustrates a flowchart showing a method to identify the location of the flame in accordance with the first embodiment of the present disclosure;
FIG. 9A illustrates the flame having boundaries around the flame in accordance with a second embodiment of the present disclosure;
FIG. 9B illustrates a vertical line between the tip Y-coordinate and the base Y-coordinate of the flame, and a horizontal line between the left-most X coordinate and the right-most X coordinate of the flame in accordance with the second embodiment of the present disclosure;
FIG. 9C illustrates the plurality of pixels associated with the flame in accordance with the second embodiment of the present disclosure;
FIG. 10A illustrates the sequence of images showing an intensity values of a center pixel is equal to the intensities of each of the neighbouring pixels in accordance with the second embodiment of the present disclosure;
FIG. 10B illustrates a table showing the sequence of images showing an intensity values of a center pixel is equal to the intensities of each of the neighbouring pixels in accordance with the second embodiment of the present disclosure;
FIG. 11A illustrates a flowchart showing a method to contour the sequence of images in accordance with the second embodiment of the present disclosure;
FIG. 11B illustrates a flowchart showing a method to determine the center pixel of the plurality of pixels associated with the flame within the FoV for at least one of the sequence of images in accordance with the second embodiment of the present disclosure;
FIG. 11C illustrates a flowchart showing a method to identify the location of the flame in accordance with the second embodiment of the present disclosure;
FIG. 12 illustrates aligning a flickering frequency of the at least one flame detector to a flickering frequency of the sequence of images captured by the at least one image capturing device in accordance with a third embodiment of the present disclosure;
FIG. 13 illustrates a plurality of graphs showing the flickering frequency of the at least one flame detector and the flickering frequency of the sequence of images captured by the at least one image capturing device in accordance with the third embodiment of the present disclosure;
FIG. 14A illustrates a flowchart showing a method to contour the sequence of images in accordance with the third embodiment of the present disclosure;
FIG. 14B illustrates a flowchart showing the steps to determine the flickering frequency of the at least one flame detector and the flickering frequency of the sequence of images in accordance with the third embodiment of the present disclosure; and
FIG. 14C illustrates a flowchart showing a method to identify the location of the flame in accordance with the third embodiment of the present disclosure.

### DETAILED DESCRIPTION

Some embodiments will now be described more fully hereinafter with reference to the accompanying drawings, in which some, but not all, embodiments are shown. Indeed, various embodiments may be embodied in many different forms and should not be construed as limited to the embodiments set forth herein; rather, these embodiments are provided so that this disclosure will satisfy applicable legal requirements.

The components illustrated in the figures represent components that may or may not be present in various embodiments of the invention described herein such that embodiments may include fewer or more components than those shown in the figures while not departing from the scope of the invention. Some components may be omitted from one or more figures or shown in dashed line for visibility of the underlying components.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in various embodiments," "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments or it may be excluded.

The present disclosure provides various embodiments of systems and methods for identifying a location of a flame within a field of view (FoV). Embodiments may be configured to generate a data corresponding to detection of a presence of the flame within the field of view (FoV). Further, embodiments may be configured to capture a sequence of images of the flame within the FoV. Embodiments may be configured to determine a base Y-coordinate, a tip Y-coordinate, a left-most X-coordinate, and a right-most X-coordinate of a plurality of pixels associated with the flame within the FoV for each of the sequence of images. Embodiments may be configured to determine that the base Y-coordinate of a most current image of the sequence of images may vary less than a predefined limit of height of the flame as compared to a previous image of the sequence of images. Embodiments may be further configured to determine that the tip Y-coordinate of the most current image of the sequence of images may vary more than the predefined limit of height of the flame as compared to the previous image of the sequence of images, or the left-most X-coordinate or the right-most X coordinate of the most current image of the sequence of images may vary more than a predefined limit of width of the flame as compared to the previous image of the sequence of images.

Embodiments may be configured to store the sequence of images in a rolling buffer for a predefined frame per second (FPS) within a memory. Embodiments may be configured to determine whether the flame may be present within an image of the sequence of images stored in the rolling buffer. Further, embodiments may be configured to save the image of the sequence of images stored in the rolling buffer within the memory as a previous frame, upon determining the flame may be present within the image of the sequence of images. Further, embodiments may be configured to store another sequence of images received from the at least one image capturing device in the rolling buffer for the predefined FPS within the memory as a current frame.

Embodiments may be configured to determine the base Y-coordinate, the tip Y-coordinate, the left-most X-coordinate, and the right-most X-coordinate. Embodiments may be further configured to extract red green blue (RGB) frames from the previous image and the most current image of the sequence of images. Embodiments may be further configured to split the RGB frame of the previous image and the most current image into an R channel, a G channel, and a B channel. Further, embodiments may be further configured to subtract one or more pixels of the G channel from one or more pixels of the R channel. Embodiments may be configured to determine that a difference of a pixel value between the R channel and the G channel may be greater than 60. Embodiments may be configured to dilate the sequence of images from the previous frame and the current frame by adding the one or more pixels of the R channel within boundaries of the flame. Further, embodiments may be further configured to contour the dilated sequence of images by joining the one or more pixels of the R channel. Embodiments may be further configured to indicate on at least one image of the sequence of images the location of the flame within the FoV.

Embodiments may be configured to determine a center pixel of the plurality of pixels associated with the flame within the FoV for at least one of the sequence of images. Embodiments may be configured to determine an intensity of the center pixel and intensities of neighbouring pixels. Further, embodiments may be further configured to determine that an intensity value of the center pixel may be equal to the intensities of each of the neighbouring pixels.

Embodiments may be configured to determine coordinates for the center pixel of the plurality of pixels associated with the flame within the FoV for the at least one of the sequence of images. Embodiments may be configured to determine a vertical line between the tip Y-coordinate and the base Y-coordinate of the flame. Embodiments may be further configured to determine a horizontal line between a left-most X-coordinate and a right-most X-coordinate of the flame. Embodiments may be further configured to determine an intersection point of the vertical line and the horizontal line. Further, embodiments may be configured to associate the intersection point as the center pixel.

Embodiments may be configured to determine a flickering frequency of the at least one flame detector may be equal to a flickering frequency of the sequence of images captured by the at least one image capturing device. Embodiments may be further configured to determine a single mean value of one or more pixels inside the contoured sequence of images for the predefine FPS. Embodiments may be further configured to convert the single mean value into a frequency domain representation.

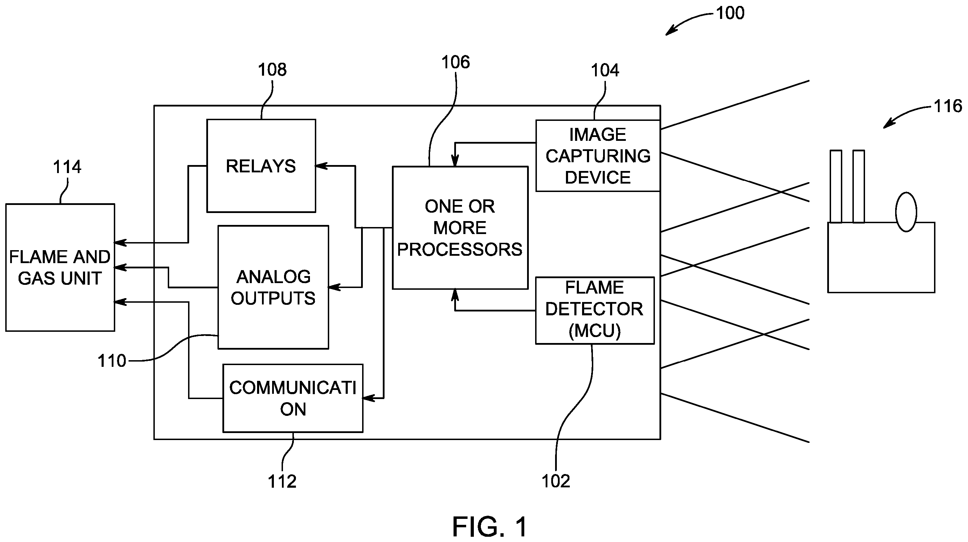

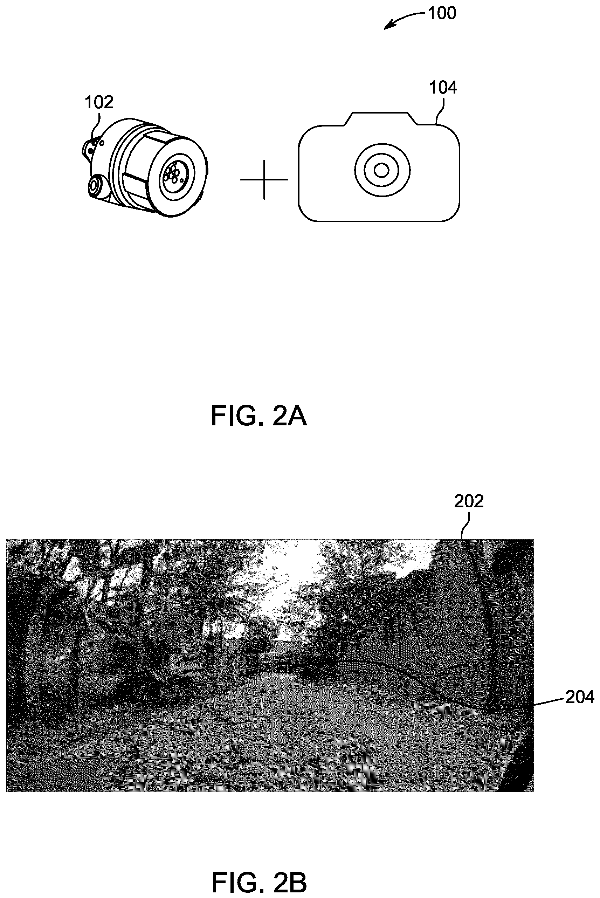

FIG. 1 illustrates a block diagram of a flame detection system 100 for identifying a location of a flame within a field of view (FoV) 116, in accordance with an example embodiment of the present disclosure. FIG. 2A illustrates integration of at least one flame detector 102 and at least one image capturing device 104 in the flame detection system 100, in accordance with an example embodiment of the present disclosure.

In some embodiments, the flame detection system 100 may comprise the at least one flame detector 102, the at least one image capturing device 104, and one or more processors 106. The at least one flame detector 102 and the at least one image capturing device 104 may be placed within a site. The at least one flame detector 102 may be configured to generate a data corresponding to detection of a presence of a flame within the field of view (FoV) 116. The at least one image capturing device 104 may be operationally coupled to the at least one flame detector 102. The at least one image capturing device 104 may be configured to capture a sequence of images of the flame within the FoV 116. A plurality of pixels of each image of the sequence of images may be associated with the flame within the FoV 116.

In some embodiments, the at least one flame detector 102 may be responsible for detecting the presence of the flame within the FoV 116 using a plurality of sensors. The plurality of sensors may identify unique characteristics of the flame. The unique characteristics of the flame may correspond to infrared, ultraviolet, or visible light emissions. The at least one flame detector 102 may be equipped with the plurality of sensors that may detect the presence of the flame by recognizing optical signatures associated with the flame. The plurality of sensors may be based at least on the infrared (IR), the ultraviolet (UV), or the visible light detection technologies. In some embodiments, the at least one flame detector 102 may correspond to an IR sensor based flame detector. The plurality of sensors may identify the flame under one or more conditions. The at least one flame detector 102 may continuously monitor the FoV 116 and may trigger an alert when the at least one flame detector 102 may detect the flame. Once the flame may be detected, the at least one image capturing device 104 may capture the sequence of images of the site. The at least one image capturing device 104 may correspond to a camera. The sequence of images of the flame within the FoV 116 may be stored in a memory and may further be processed by the one or more processors 106.

In some embodiments, the image capturing device 104 may capture a sequence of images. In one example, the sequence of images may correspond to a "Fire Movie". The sequence of images may include moments leading up to an alarm activation. In some embodiments, the process of creating the "Fire Movie" may begin with generation of the data corresponding to the detection of the presence of the flame within the FoV 116. The at least one flame detector 102 may be equipped with an IR sensor. The IR sensor may be capable of detecting the specific infrared emissions characteristic of the flame. When the IR sensor may detect the infrared emissions, indicating the presence of the flame, the flame detection system 100 may trigger the at least one image capturing device 104 to start capturing the sequence of images of the flame within the FoV 116. The at least one image capturing device 104 may capture the sequence of images or video frames within the FoV 116. The sequence of images or the video frames may be stored in the memory. The sequence of images may encompass both pre-alarm period and the moments immediately following the detection of the flame.

In some embodiments, the one or more processors 106 may be configured to identify the location of the flame within the FoV 116 by executing either of three embodiments that are described in the following description. In a first embodiment, the one or more processors 106 may be configured to determine a base Y-coordinate, a tip Y-coordinate, a left-most X-coordinate, and a right-most X-coordinate of the plurality of pixels associated with the flame within the FoV 116 for each of the sequence of images. Further, the one or more processors 106 may be configured to determine that the base Y-coordinate of a most current image of the sequence of images varies less than a predefined limit of height of the flame as compared to a previous image of the sequence of images. Further, the one or more processors 106 may be configured to determine that the tip Y-coordinate of the most current image of the sequence of images varies more than the predefined limit of height of the flame as compared to the previous image of the sequence of images, or the left-most X-coordinate or the right-most X coordinate of the most current image of the sequence of images varies more than a predefined limit of width of the flame as compared to the previous image of the sequence of images.

In some embodiments, the predefined limit of the height of the flame may correspond to 2% of the height of the flame and the predefined limit of the width of the flame may correspond to 2% of the width of the flame. In some embodiments, the base Y-coordinate may correspond to a bottom most pixel coordinate of the flame. The tip Y-coordinate may correspond to top-most pixel coordinate of the flame. The left-most X-coordinate may correspond to a left X-coordinate that corresponds to an extreme left most pixel coordinate of the flame and the right-most X-coordinate may correspond to a right X-coordinate that corresponds to an extreme right most pixel coordinate of the flame.

In a second embodiment, the one or more processors 106 may be configured to determine a center pixel of the plurality of pixels associated with the flame within the FoV 116 for at least one of the sequence of images. Further, the one or more processors 106 may be configured to determine an intensity of the center pixel and intensities of neighbouring pixels. The neighbouring pixels may comprise a pixel that is to the left of the center pixel, a pixel that is to the right of the center pixel, a pixel that is directly below the center pixel, and a pixel that is directly above the center pixel. Further, the one or more processors 106 may be configured to determine that an intensity value of the center pixel is equal to the intensities of each of the neighbouring pixels.

In some embodiments, the intensity value of the neighbouring pixels' coordinates of a center pixel coordinate is the same as pixel values of the center pixel coordinate of the sequence of images. In some embodiments, the one or more processors 106 may be configured to determine whether the pixel values of the center pixel coordinate and the neighbouring pixels' coordinates, is nearly same. The one or more processors 106 may compare intensity and colour values of the neighbouring pixels' coordinates and the center pixel coordinate. The one or more processors 106 may further enhance flame detection accuracy by analyzing the pixel values within the sequence of images to confirm the presence of the flame. If the neighbouring pixels' coordinate exhibits similar pixel values, the one or more processors 106 may suggest a consistent and contiguous flame, rather than random noise or reflections.

In a third embodiment, the one or more processors 106 may be configured to determine that a flickering frequency of the at least one flame detector 102 is equal to a flickering frequency of the sequence of images captured by the at least one image capturing device 104. In some embodiments, the one or more processors 106 is configured to align flickering frequency of an IR sensor and the at least one image capturing device 104 to synchronize the data. The synchronized data may be used to determine accurate flame source localization, and the IR sensor may be integrated into the at least one flame detector 102. The one or more processors 106 may synchronize the flickering frequency of the at least one flame detector 102 with that of the image capturing device 104 to enhance the accuracy of the flame localization. In some embodiments, the flame may inherently exhibit a characteristic flickering pattern due to turbulent nature of combustion. In some embodiments, by aligning flickering frequency of the at least one flame detector 102, which may detect the infrared emissions, with the sequence of images capture rate of the at least one image capturing device 104, the flame detection system 100 may correlate data more effectively. The synchronized data may provide a comprehensive view of the flame's behavior over time, allowing the one or more processors 106 to accurately pinpoint the flame's location.

In some embodiments, the flame detection system 100 is further configured to indicate on at least one image of the sequence of images the location of the flame within the FoV 116. Further, the plurality of pixels of the sequence of images may correspond to one or more pixels of the current frame and the one or more pixels of the previous frame.

The one or more processors 106 may include suitable logic, circuitry, and/or interfaces that are operable to execute one or more instructions stored in the memory to perform predetermined operations. In one embodiment, the one or more processors 106 may be configured to decode and execute any instructions received from one or more other electronic devices or server(s). The one or more processors 106 may be configured to execute one or more computer-readable program instructions, such as program instructions to carry out any of the functions described in this description. Further, the processor may be implemented using one or more processor technologies known in the art. Examples of the one or more processors 106 may include, but are not limited to, one or more general purpose processors (e.g., INTEL^{®} or Advanced Micro Devices^{®} (AMD) microprocessors) and/or one or more special purpose processors (e.g., digital signal processors or Xilinx^{®} System On Chip (SOC) Field Programmable Gate Array (FPGA) processor).

In some embodiments, after detecting the flame by using either of the three embodiments, the one or more processors 106 may send a control signal to relays 108, analog outputs 110, and communication 112. The relays 108, the analog outputs 110, and the communication 112 may serve as an output of the flame detection system 100. In some embodiments, upon generation of the data corresponding to the detection of the presence of the flame within the FoV 116, a flame and gas unit 114 may activate safety measures such as alarms or shutdown procedures to prevent hazards. Further, if the flame detection system 100 may include a gas detection component, the flame and gas unit 114 may monitor for the presence of combustible or toxic gases.

It will be apparent to one skilled in the art that above-mentioned components of the flame detection system 100 have been provided only for illustration purposes, without departing from the scope of the disclosure.

FIG. 2B illustrates a suspected region 204 in a sequence of images 202 within the FoV, in accordance with an example embodiment of the present disclosure.

In some embodiments, the one or more processors 106 may mark and highlight the suspected region 204 on the captured sequence of images 202. The suspected region 204 is a specific area within the captured sequence of images 202 or the video frames that is suspected to contain the flame or a potential false alarm. The one or more processors 106 may analyze the captured sequence of images 202 to identify the plurality of pixels associated with the flame within the FoV 116 and determine the coordinates of the identified plurality of pixels. In some embodiments, once the plurality of pixels is identified, the one or more processors 106 may mark the suspected region 204 on the analyzed sequence of images 202. Marking the suspected region 204 is done by drawing a rectangle or another shape around the area containing the plurality of pixels. The suspected region 204 may indicate an area of interest on the captured sequence of images 202, the sequence of video frames, or the fire movie.

In some embodiments, the suspected region 204 may correspond to a marked image from the sequence of images 202 where the flame's position is highlighted. The marking may include visual indicators that may clearly illustrate the flame's location. The visual indicators may correspond to bounding boxes, or coloured overlays. The suspected region 204 may provide a visual representation of the flame's exact position within the FoV 116. The suspected region 204 may be crucial for effective fire management. A user may immediately see where the flame is located, reducing the time needed to find the flame manually and may allow for faster intervention.

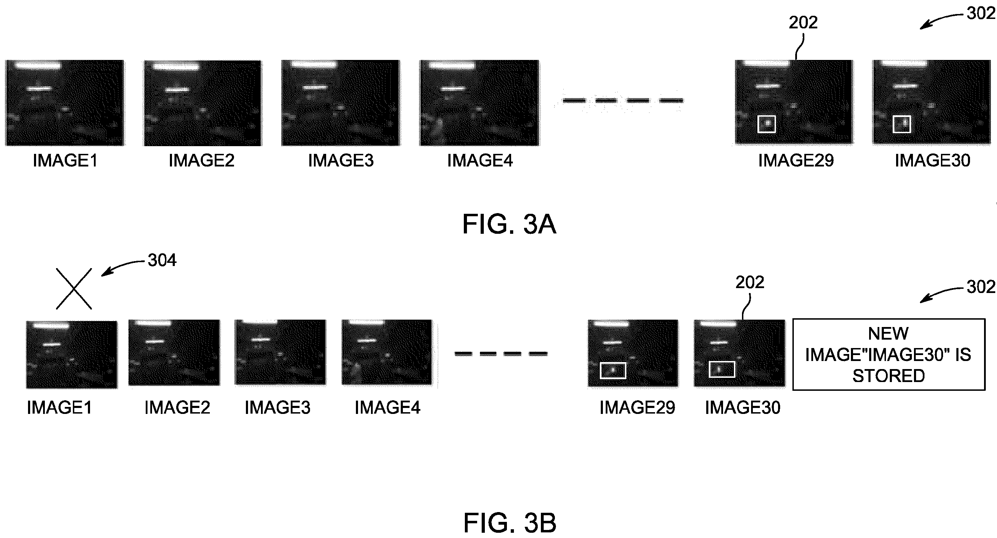

FIG. 3A illustrates the sequence of images 202 in a rolling buffer 302, in accordance with an example embodiment of the present disclosure. FIG. 3B illustrates addition of another image in the sequence of images 202 in the rolling buffer 302, in accordance with an example embodiment of the present disclosure.

In some embodiments, the one or more processors 106 is configured to store the sequence of images 202 in the rolling buffer 302 for a predefined frame per second (FPS) within a memory. The flame detection system 100 may ensure that the predefined FPS may be continuously recorded and updated, providing a rolling record of the FoV (site). The predefined number of the sequence of images 202 may correspond to 30. The rolling buffer 302 may hold 30 seconds of visual data at a given time. The sequence of images 202 may be sequentially named from Image1 to Image30. When a counter may reach 30, indicating that the rolling buffer 302 is full, the one or more processors 106 may begin a process of updating the stored sequence of images 202.

In some embodiments, the one or more processors 106 is configured to determine whether the flame is present within an image of the sequence of images 202 stored in the rolling buffer 302. Further, the one or more processors 106 may be configured to save the sequence of images 202 stored in the rolling buffer 302 within the memory as a previous frame, upon determining the flame is present within the image of the sequence of images 202. In some embodiments, Image1 is deleted (as shown by 304) to make space for the new sequence of images 202. Image2 is renamed to Image1. Image3 is renamed to Image2. The renaming sequence of images 202 may continue to be renamed up to Image29. Further, a new image is then captured and is stored as Image30. The process may ensure that the rolling buffer 302 may always contain the most recent sequence of images 202.

In some embodiments, upon detection of the flame or an alarm event, the flame detection system 100 may take a snapshot of the most current image of the rolling buffer 302. The most current image of the sequence of images 202 may be saved into a folder named "FireMoviel" within the memory. The folder may contain the sequence of images 202 numbered from 1 to 30. The folder may preserve visual data that may lead up to the flame or the alarm event. The FireMovie1 may freeze. The FireMovie1 is stored as the previous frame. After freezing the FireMovie1, the one or more processors 106 may initiate a new sequence of the sequence of images 202 storage. The one or more processors 106 may be configured to store another sequence of images 202 received from the at least one image capturing device 104 in the rolling buffer 302 for the predefined FPS within the memory as a current frame. Further, a new folder named "FireMovie2" is created. The rolling buffer 302 process is restarted, and the steps of storing the sequence of images 202, updating the rolling buffer 302, and handling new alarm events is repeated. By continuously updating and renaming the sequence of images 202, the flame detection system 100 may efficiently use the memory without requiring large amount of the memory (not shown).

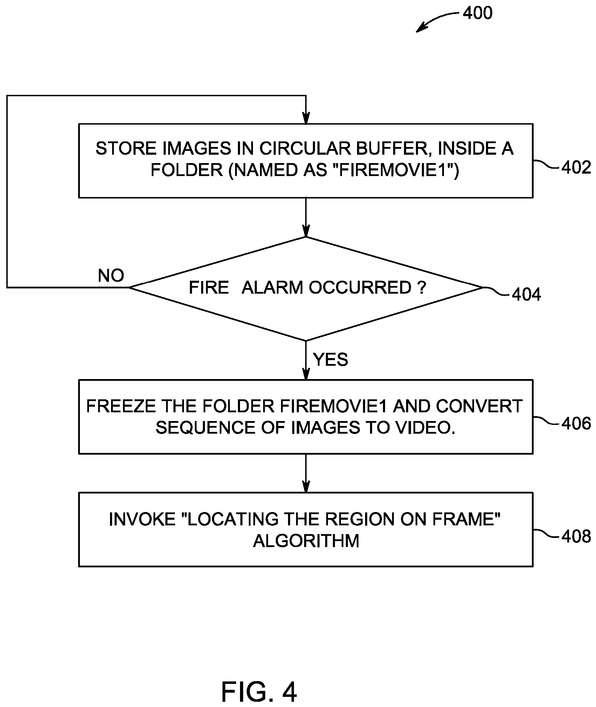

FIG. 4 illustrates a flowchart 400 showing a method to store a fire movie in the memory, in accordance with an example embodiment of the present disclosure.

At operation 402, the flame detection system 100 may store the sequence of images 202 in the rolling buffer 302, inside the folder named as FireMovie1. In some embodiments, the flame detection system 100 may initialize the rolling buffer 302 and may prepare the rolling buffer 302 for storing the sequence of images 202. The folder named "FireMovie1" is created to store the sequence of the sequence of images 202. The flame detection system 100 may capture the sequence of images 202 at regular intervals. The sequence of images 202 may be stored sequentially in the rolling buffer 302 within the "FireMovie1" folder. The rolling buffer 302 may ensure that the folder always contains the most recent 30 images, updating continuously as the new sequence of images 202 are captured.

At operation 404, the flame detection system 100 may determine whether the fire alarm occurred or not. If the fire alarm did not occur, then the flame detection system 100 may store the sequence of images 202 in the rolling buffer 302, inside the folder named as FireMovie1. In some embodiments, the flame detection system 100 may continuously monitor for the fire alarm event. Monitoring for the fire alarm event may involve analyzing data from the at least one flame detector 102 and the infrared (IR) sensor integrated within the at least one flame detector 102. If no fire alarm is detected, the flame detection system 100 may continue to store the sequence of images 202 in the rolling buffer 302, inside the folder named as FireMovie1.

If the fire alarm occurs, at operation 406, the flame detection system 100 may freeze the folder FireMovie1 and may convert the sequence of the sequence of images 202 to the video frame. In some embodiments, upon detecting the fire alarm, the flame detection system 100 may freeze the current state of the "FireMovie1" folder. Freezing the folder may correspond to the current sequence of the sequence of images 202 being preserved and no further images of the sequence of images 202 are written to the folder. The sequence of the sequence of images 202 stored in the "FireMovie1" folder may be converted into the video frame. The video frame may capture the moments leading up to and during the fire alarm event.

At operation 408, the flame detection system 100 may invoke locating the region on frame algorithm. In some embodiments, after converting the sequence of images 202 to the video frame, the flame detection system 100 may invoke the algorithm to locate the suspected region 204 within the video frame. The suspected region locating algorithm may analyze the video frame to identify and highlight the areas that are suspected to be the source of the fire or areas of potential false alarms. The identified suspected region 204 may be marked and highlighted within the video frame.

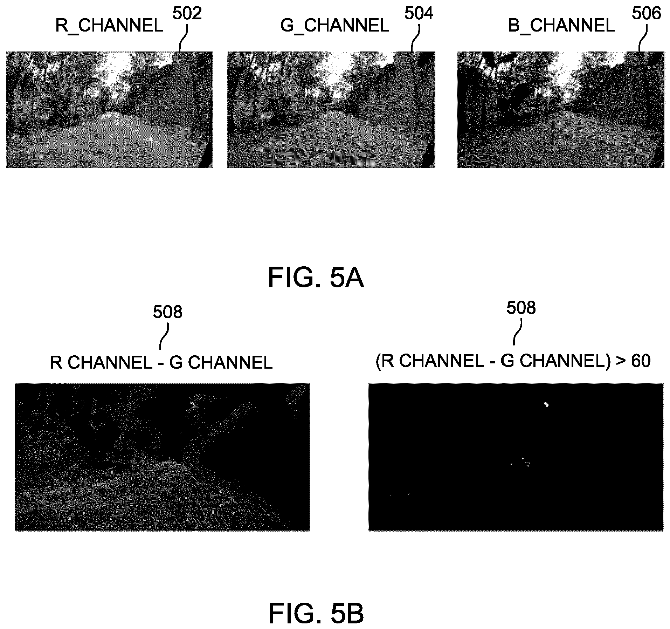

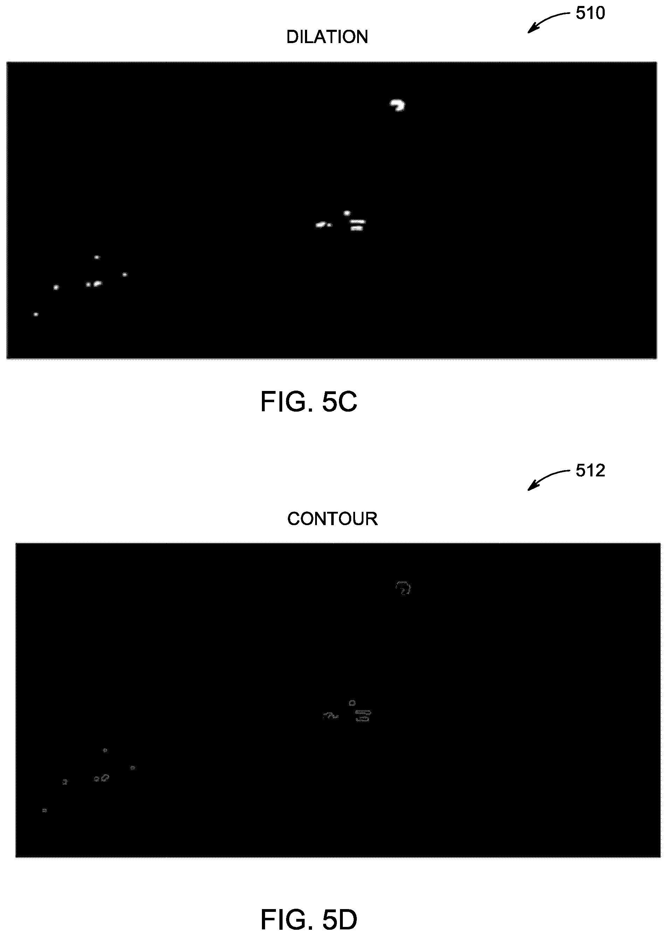

FIG. 5A illustrates an R channel 502, a G channel 504 and a B channel 506 of each of the sequence of images 202, in accordance with a first embodiment of the present disclosure. FIG. 5B illustrates subtraction of one or more pixels of the G channel 504 from one or more pixels of the R channel 502, in accordance with the first embodiment of the present disclosure. FIG. 5C illustrates dilation of the sequence of images 202, in accordance with the first embodiment of the present disclosure. FIG. 5D illustrates contouring of the sequence of images 202, in accordance with the first embodiment of the present disclosure.

In some embodiments, the one or more processors 106 is configured to extract red green blue (RGB) frames from the previous frame and the current frame. Further, the one or more processors 106 may be configured to split the RGB frame of the previous frame and the current frame into a R channel 502, a G channel 504, and a B channel 506. The previous frame and the current frame may be decomposed into a series of the RGB frame. Each RGB frame may contain color information in the Red channel 502, the Green channel 504, and the Blue channels 506. Splitting the RGB frame into the R channel 502, the G channel 504, and the B channel 506 may allow for individual analysis of each color channel.

In some embodiments, the one or more processors 106 is configured to subtract one or more pixels of the G channel 504 from one or more pixels of the R channel 502. Further, the one or more processors 106 may be configured to retain one or more pixels if a difference of a pixel value between the R channel 502 and the G channel 504 is greater than 60. The one or more processors 106 may identify potential flame regions based at least on color intensity differences. Further, if the difference (R channel- G channel) 508 exceeds a predefined threshold, the one or more pixels may be retained as a potential fire pixel. The predefined threshold may correspond to 60.

In some embodiments, the one or more processors 106 is configured to dilate the sequence of images 202 from the previous frame and the current frame by adding the one or more pixels of the R channel 502 within boundaries of the flame. The one or more processors 106 may add the one or more pixels to the boundaries of an object to fill in the holes inside the object. The process of adding the one or more pixels to the boundaries of the object to fill in the holes inside the object is called Dilation. Dilation may enhance continuity and integrity of detected fire regions. Dilation may add the one or more pixels to the boundaries of the object, filling in small holes and gaps within the detected fire regions. Dilation may help in creating more solid and connected areas representing the fire.

In some embodiments, the one or more processors 106 is configured to contour the dilated sequence of images 510 by joining the one or more pixels of the R channel 502. The one or more processors 106 may define the boundary of the detected fire regions. The one or more processors 106 may join all the continuous white points along the boundary of the object. Joining all the continuous white points along the boundary of the object may correspond to contouring the sequence of images. The one or more processors 106 may use a contour detection algorithm to join all the continuous white points along the boundary of the detected fire regions. Contours (as shown by 512) may be created by tracing edges of the connected regions, effectively outlining the fire's shape.

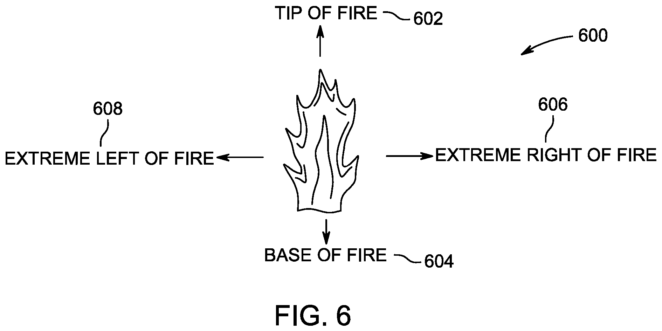

FIG. 6 illustrates a flame 600, in accordance with an example embodiment of the present disclosure.

In some embodiments, a tip Y-coordinate 602 is the maximum height of one or more fire pixel's coordinate. During the contour, each of the one or more fire pixels in the fire region may be analyzed to find the pixel with the highest y-coordinate. The tip Y-coordinate 602 may represent top-most point of the flame 600, indicating the highest point the flame 600 may reach. In some embodiments, a base Y-coordinate 604 is the bottom-most pixel coordinate of the flame 600. Similarly, during contouring, each of the one or more fire pixels in the fire region may be analyzed to find the pixel with the lowest y-coordinate. The base Y-coordinate 604 may represent the bottom-most point of the flame 600, indicating the point where the flame 600 may meet the ground or the base of the object that may be on the flame 600.

In some embodiments, the right-most X-coordinate 606 is the right-most pixel coordinate of the flame 600. The contouring may identify the pixel with the maximum x-coordinate within the fire region. The right-most X-coordinate 606 may represent the farthest right point of the flame 600, indicating the extent to which the flame 600 may spread horizontally to the right. The left-most X-coordinate 608 is the left-most pixel coordinate of the flame 600. The contouring may identify the pixel with the minimum x-coordinate within the fire region. The left-most X-coordinate 608 may represent the farthest left point of the flame 600, indicating the extent to which the flame 600 may spread horizontally to the left.

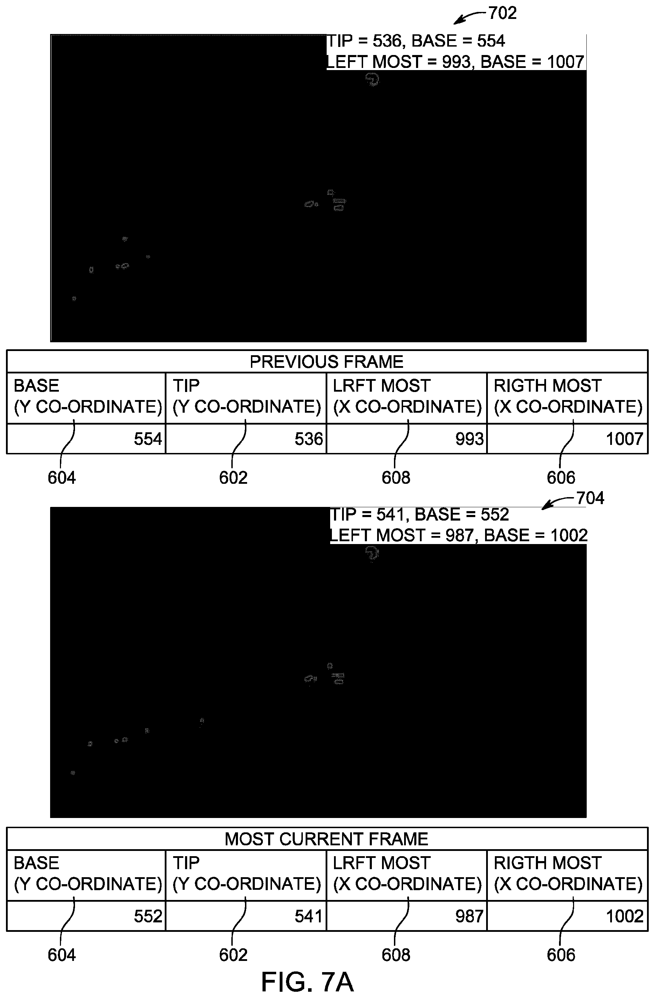

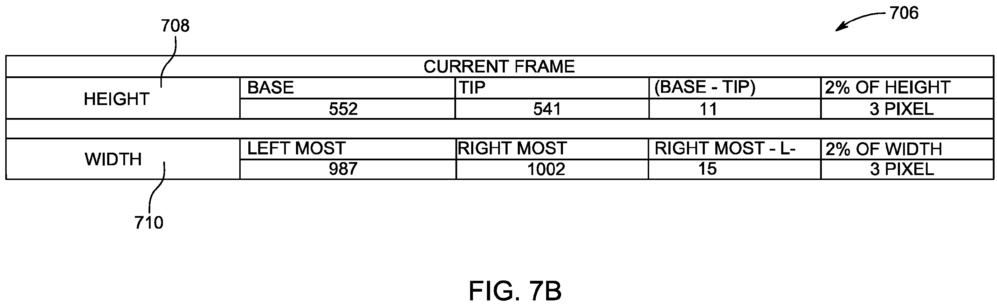

FIG. 7A illustrates a base Y-coordinate 604, a tip Y-coordinate 602, a left-most X-coordinate 608, and a right-most X coordinate 606 of a plurality of pixels associated with the flame within the FoV for a most current image and a previous image of the sequence of images 202, in accordance with the first embodiment of the present disclosure. FIG. 7B illustrates a table 706 showing determination of a predefined limit of height of the flame and a predefined limit of width of the flame 600, in accordance with the first embodiment of the present disclosure.

In some embodiments, the base Y-coordinate 604 may represent the lowest point of the detected flame within the frame. In one example, the base Y-coordinate 604 of the most current frame 704 may correspond to 552 pixels. The base Y-coordinate 604 may indicate the bottom-most point of the flame 600. The tip Y-coordinate 602 may represent the highest point of the detected fire within the frame. The tip Y-coordinate 602 of the most current frame 704 may correspond to 541 pixels. The tip Y-coordinate 602 may indicate the top-most point of the flame 600. Further, the height (as shown in 708) of the flame 600 may correspond to the base Y-coordinate- the tip Y-coordinate. Further, the height (as shown in 708) of the flame 600 may correspond to 552 pixels -541 pixels. The height (as shown in 708) of the flame 600 is 11 pixels. The height (as shown in 708) may be derived by subtracting the tip Y-coordinate 602 from the base Y-coordinate 604. The height (as shown in 708) may represent the vertical span of the flame 600 within the frame. Further, 2% of the height (as shown in 708) of the flame may correspond to 3 pixels.

The left-most X-coordinate 608 may correspond to the minimum x-coordinate of the detected flame 600 within the frame. In the most current frame 704, the left-most X-coordinate 608 may correspond to 987 pixels. The left-most X-coordinate 606 may represent the farthest point to the left where the flame 600 may be detected. The left-most X-coordinate 606 may mark starting boundary of the flame 600 on a horizontal axis. The right-most X-coordinate 606 may correspond to the maximum x-coordinate within the detected fire region. In the most current frame 704, the right-most X-coordinate 606 may correspond to 1002 pixels. The right most X-coordinate 606 may correspond to the farthest point to the right where the flame 600 may be detected. The right most X-coordinate 606 may mark the ending boundary of the fire region on the horizontal axis. Further, the width (as shown in 710) of the flame 600 within the frame may correspond to the horizontal distance between the left-most X-coordinate 608 and the right-most X-coordinate 606. The width (as shown in 710) may be calculated by subtracting the x-coordinate of the left-most 608 pixels from the x-coordinate of the right-most 606 pixels. Further, the width (as shown in 710) of the flame 600 may correspond to (the rightmost X-coordinate- the leftmost X-coordinate). Further, width (as shown in 710) of the flame 600 may correspond to (1002 pixels -987 pixels). The width (as shown in 710) of the flame 600 is 15 pixels. Further, 2% of the width (as shown in 710) of the flame 600 may correspond to 3 pixels.

In another example, the base Y-coordinate 604 of the previous frame 702 may correspond to 554 pixels. Further, the tip Y-coordinate 602 of the previous frame 702 may correspond to 536 pixels. Further, the left-most X-coordinate 608 may correspond to 993 pixels. Further, the right-most X-coordinate 606 may correspond to 1007 pixels.

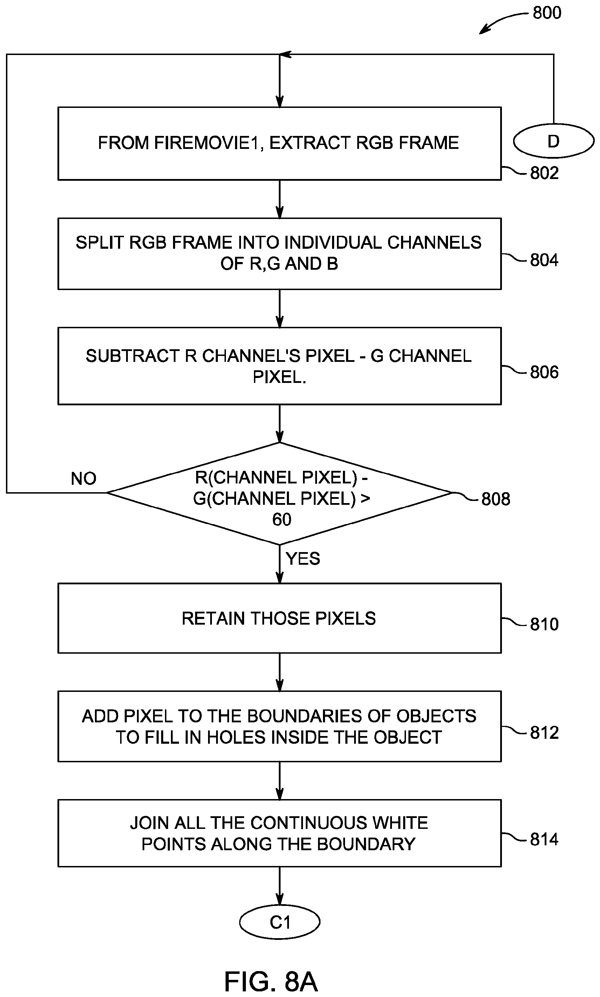

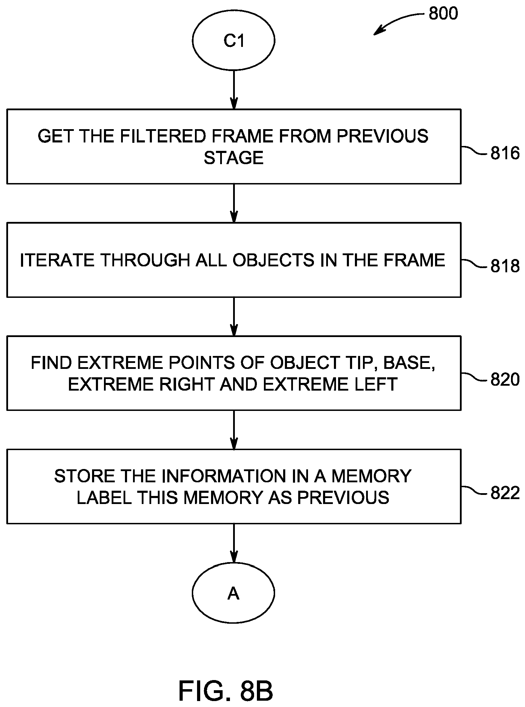

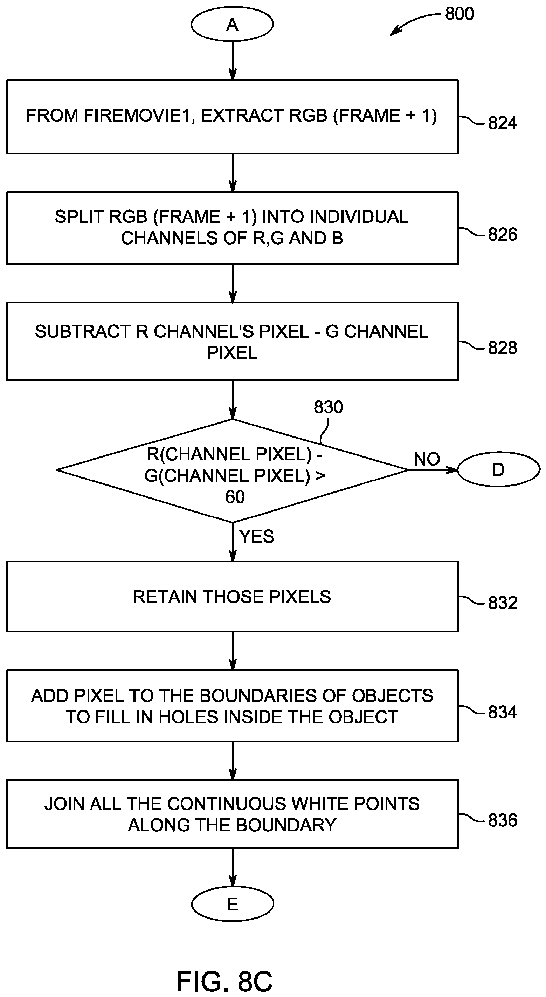

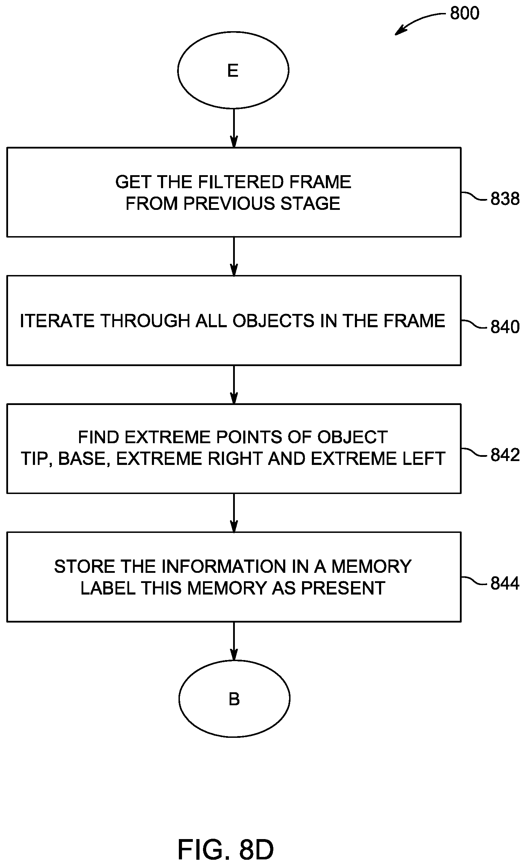

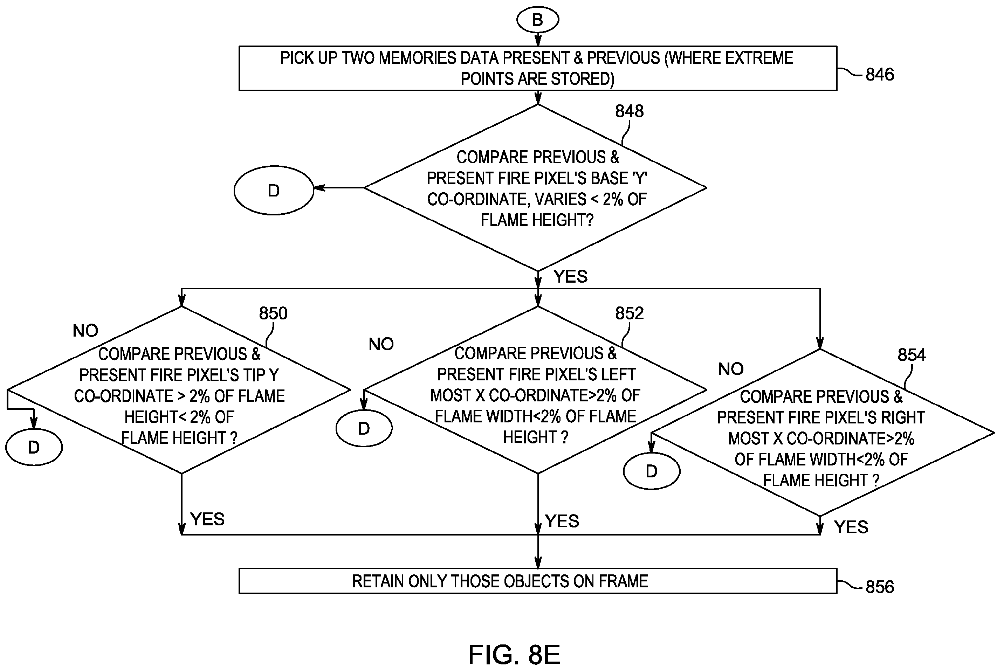

FIG. 8A illustrates a flowchart 800 showing a method to contour the sequence of images 202, in accordance with the first embodiment of the present disclosure. FIG. 8B illustrates a flowchart 800 showing a method to store the sequence of images 202 in the memory as a previous frame 702, in accordance with the first embodiment of the present disclosure. FIG. 8C illustrates a flowchart 800 showing a method to contour another sequence of images 202, in accordance with the first embodiment of the present disclosure. FIG. 8D illustrates a flowchart 800 showing a method to store the sequence of images 202 in the memory as a current frame 704, in accordance with the first embodiment of the present disclosure. FIG. 8E illustrates a flowchart 800 showing a method to identify the location of the flame 600, in accordance with the first embodiment of the present disclosure.

At operation 802, from the FireMovie1, the one or more processors 106 may be configured to extract the RGB frame. In some embodiments, the one or more processors 106 may extract the RGB frame from the folder named FireMovie1. Extracting the RGB frame from the folder named FireMovie1may initialize the process of identifying the flame by obtaining a single frame from the video sequence stored in the FireMovie1 folder. The extracted RGB frame may serve as the basis for image processing and analysis.

At operation 804, the one or more processors 106 may split the RGB frame into one or more channels. The one or more channels may correspond to the R channel 502, the G channel 504, and the B channel 506, as shown in FIG. 5A. Splitting the RGB frame into the one or more channel may allow for individual analysis of each color channel. One or more colors may provide unique information about the presence and intensity of the flame 600.

At operation 806, the one or more processors 106 may subtract the G channel 504 pixel values from the R channel 502 pixel values, as show in FIG. 5B. The one or more processors 106 may identify potential fire regions based at least on color intensity differences. For each pixel in the sequence of images 202, subtract the Green channel 504 pixel values from the Red channel 502 pixel values. In some embodiments, the flame 600 may have a higher intensity in the red channel 502 compared to the green channel 504. Subtracting the red channel 502 pixel values and the green channel 504 pixel values may highlight potential fire regions.

At operation 808, the one or more processors 106 may determine whether the difference (R channel pixel values- G channel pixel values) 508 may exceed a predefined threshold or not. The predefined threshold may correspond to 60. If the difference (R channel pixel values- G channel pixel values) 508 does not exceed the predefined threshold, from the FireMovie1, the one or more processors 106 may extract the RGB frame, at step 802. Determining whether the difference (R channel pixel values- G channel pixel values) 508 exceeds the predefined threshold or not may filter out non-fire regions based at least on the color intensity difference.

At operation 810, the one or more processors 106 may retain the pixel values whose difference (R channel pixel values- G channel pixel values) 508 may exceed the predefined threshold. Retaining the pixel values whose difference (R channel pixel values- G channel pixel values) 508 exceeds the predefined threshold may isolate the pixels that is likely part of the fire region.

At operation 812, the one or more processors 106 may add the one or more pixels to the boundaries of an object to fill in the holes inside the object. The process of adding the one or more pixels to the boundaries of the object to fill in the holes inside the object is called as Dilation. Dilation may enhance continuity and integrity of the detected fire regions. Dilation may add the one or more pixels to the boundaries of the object, filling in small holes and gaps within the detected fire regions. Dilation may help in creating more solid and connected areas representing the fire.

At operation 814, the one or more processors 106 may define the boundary of the detected fire regions. The one or more processors 106 may join all the continuous white points along the boundary of the object. Joining all the continuous white points along the boundary of the object may correspond to contour. The one or more processors 106 may use a contour detection algorithm to join all the continuous white points along the boundary of the detected fire regions. Contours may be created by tracing edges of the connected regions, effectively outlining the fire's shape.

At operation 816, the one or more processors 106 may get filtered frame from previous stage. In some embodiments, the filtered frame may contain only the regions that are likely to be the flame 600. The frame may be filtered through threshold, dilation, and contour. At operation 818, the one or more processors 106 may iterate through all the detected object in the frame. Iterating through all the detected object in the frame may ensure that each potential fire region may be individually analyzed. Iterating through each object may allow the system 100 to handle multiple fire regions within a single frame.

At operation 820, the one or more processors 106 may find extreme points of the object. The extreme points may correspond to the tip Y-coordinate 602, the base Y-coordinate 604, the right-most X-coordinate 606, and the left-most X-coordinate 608. The tip Y-coordinate 602 may correspond to the highest point of the fire region. The base Y-coordinate 604 may correspond to the lowest point of the fire region. The right-most X-coordinate 606 may correspond to the rightmost point of the fire region. The left-most X-coordinate 608 may correspond to the leftmost point of the fire region. The extreme points may define the boundary of the flame 600, and assessing the size of the flame 600.

At operation 822, the one or more processors 106 may store the information in the memory. Further, the one or more processors 106 may label the memory as previous. In some embodiments, the one or more processors 106 may store the information about the extreme points of each object in the memory. The information may be labeled as "previous" for future reference. Storing the information may allow the flame detection system 100 to compare and analyze changes in the fire region over subsequent frames.

At operation 824, from the FireMovie1, the one or more processors 106 may extract the RGB (frame+1). In some embodiments, the one or more processors 106 may extract the RGB (frame+1) from the folder named FireMovie1. Extracting the RGB (frame+1) from the folder named FireMovie1may initialize the process by obtaining a single frame from the video sequence stored in the FireMovie1 folder. The extracted RGB (frame+1) may serve as the basis for image processing and analysis.

At operation 826, the one or more processors 106 may split the RGB (frame+1) into the one or more channels. The one or more channels may correspond to the R channel 502, the G channel 504, and the B channel 506. Splitting the RGB (frame+1) into the one or more channel may allow for individual analysis of each color channel. One or more colors may provide unique information about the presence and intensity of the flame 600.

At operation 828, the one or more processors 106 may subtract the G channel 504 pixel values from the R channel 502 pixel values. The one or more processors 106 may identify potential fire regions based at least on color intensity differences. For each pixel in the sequence of images 202, subtract the Green channel 504 pixel values from the Red channel 502 pixel values. In some embodiments, the flame 600 may have a higher intensity in the red channel 502 compared to the green channel 504. Subtracting the red channel 502 pixel values and the green channel 504 pixel values may highlight potential fire regions.

At operation 830, determine whether the difference (R channel pixel values- G channel pixel values) 508 may exceed the predefined threshold or not. The predefined threshold may correspond to 60. If the difference (R channel pixel values- G channel pixel values) 508 may not exceed the predefined threshold, from the FireMovie1, the one or more processors 106 may extract the RGB (frame+1), at step 824. Determining whether the difference (R channel pixel values- G channel pixel values) 508 may exceed the predefined threshold or not may filter out non-fire regions based at least on the color intensity difference.

At operation 832, retain the pixel values whose difference (R channel pixel values- G channel pixel values) 508 may exceed the predefined threshold. Retaining the pixel values whose difference (R channel pixel values- G channel pixel values) 508 may exceed the predefined threshold may isolate the pixels that is likely part of the fire region.

At operation 834, the one or more processors 106 may add the one or more pixels to the boundaries of an object to fill in the holes inside the object. The process of adding the one or more pixels to the boundaries of the object to fill in the holes inside the object is called as Dilation. Dilation may enhance continuity and integrity of the detected fire regions. Dilation may add the one or more pixels to the boundaries of the object, filling in small holes and gaps within the detected fire regions. Dilation may help in creating more solid and connected areas representing the fire.

At operation 836, the one or more processors 106 may define the boundary of the detected fire regions. The one or more processors 106 may join all the continuous white points along the boundary of the object. Joining all the continuous white points along the boundary of the object may correspond to contour. The one or more processors 106 may use a contour detection algorithm to join all the continuous white points along the boundary of the detected fire regions. Contours may be created by tracing edges of the connected regions, effectively outlining the fire's shape.

At operation 838, the one or more processors 106 may get filtered frame from previous stage. In some embodiments, the filtered frame may contain only the regions that is likely to be the flame 600. The frame may be filtered through threshold, dilation, and contour. At operation 840, the one or more processors 106 may iterate through all the detected object in the frame. Iterating through all the detected object in the frame may ensure that each potential fire region may be individually analyzed. Iterating through each object may allow the flame detection system 100 to handle multiple fire regions within a single frame.

At operation 842, the one or more processors 106 may find extreme points of the object. The extreme points may correspond to the tip Y-coordinate 602, the base Y-coordinate 604, the right-most X-coordinate 606, and the left-most X-coordinate 608. The tip Y-coordinate 602 may correspond to the highest point of the fire region. The base Y-coordinate 604 may correspond to the lowest point of the fire region. The right X-coordinate 606 may correspond to the rightmost point of the fire region. The left X-coordinate 608 may correspond to the leftmost point of the fire region. The extreme points may define the boundary of the flame 600, and assessing the size of the flame 600.

At operation 844, the one or more processors 106 may store the information in the memory. Further, the one or more processors 106 may label the memory as present. In some embodiments, the one or more processors 106 may store the information about the extreme points of each object in the memory. The information may be labeled as "present" for comparison. Storing the information may allow the flame detection system 100 to compare and analyze changes in the fire region over subsequent frames.

At operation 846, the one or more processors 106 may pick up two memory data "present" and "previous". Comparing the "present" and "previous" data may allow the flame detection system 100 to detect changes in the fire region's properties over time. At operation 848, the one or more processors 106 may compare previous and present the one or more fire pixels' base Y coordinate to determine whether they vary by less than 2% of flame height. The comparison may check if the variation is less than 2% of the flame height.

At operation 850, the one or more processors 106 may compare the previous and the present one or more fire pixels' tip Y coordinate to determine whether they vary by more than 2% of flame height. In some embodiments, the one or more processors 106 may compare the tip Y coordinate of the one or more fire pixels from the "previous" and "present" data. The comparison may check if the variation is greater than 2% of the flame height.

At operation 852, the one or more processors 106 may compare previous and present the one or more fire pixels' leftmost X coordinate to determine whether they vary by more than 2% of flame width. In some embodiments, the one or more processors 106 may compare the leftmost X coordinate of the one or more fire pixels from the "previous" and "present" data. The comparison may check if the variation is greater than 2% of the flame width.

At operation 854, the one or more processors 106 may compare previous and present the one or more fire pixels' rightmost X coordinate to determine whether they vary by more than 2% of flame width. In some embodiments, the system 100 may compare the rightmost X coordinate of the one or more fire pixels from the "previous" and "present" data. The comparison may check if the variation is greater than 2% of the flame width. At operation 856, the one or more processors 106 may retain only the object on frame that may meet the comparison criteria. The comparison may filter out irrelevant changes in the fire region.

Determining that the one or more fire pixels' base Y coordinates vary by less than 2% but at least one of the tip Y coordinate, the leftmost X coordinate, or the rightmost X coordinate varies by more than 2% may be indicative of the existence of a flickering flame. For example, flame is not a stationary object and instead flickers. As such, the base Y coordinate of a flame may not vary frame-by-frame more than a threshold value, but the tip and left and right extremities may vary more than a threshold value frame-by-frame.

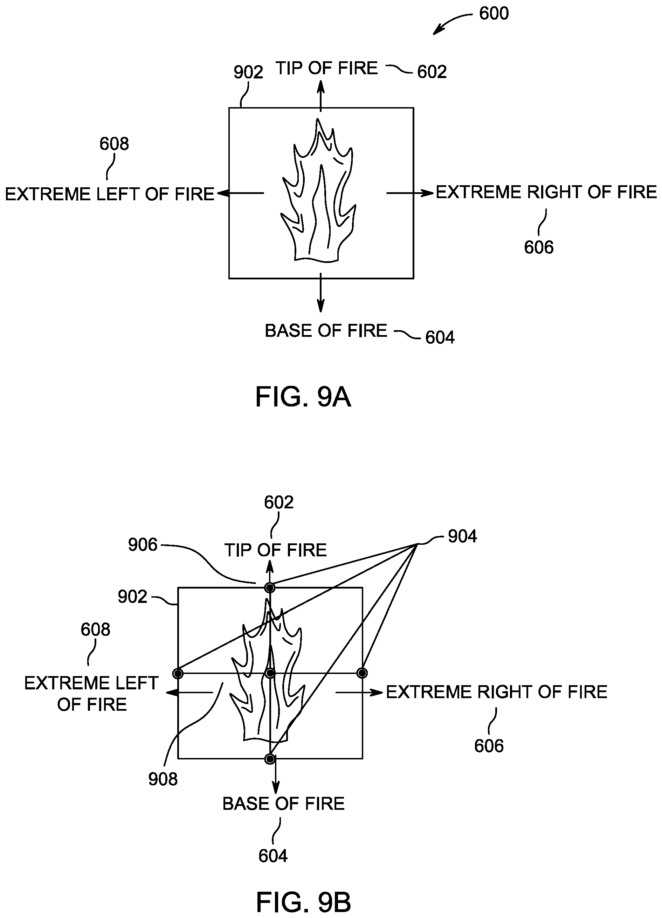

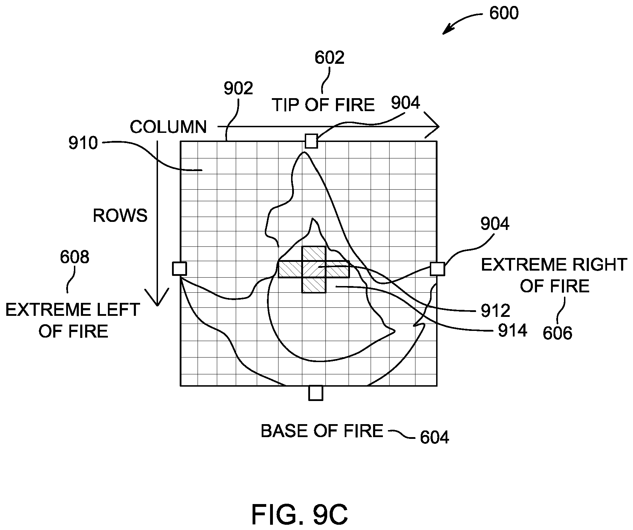

FIG. 9A illustrates the flame 600 having boundaries 902 around the flame 600, in accordance with a second embodiment of the present disclosure. FIG. 9B illustrates a vertical line 906 between the tip Y-coordinate 602 and the base Y-coordinate 604 of the flame 600, and a horizontal line 908 between the left-most X coordinate 608 and the right-most X coordinate 606 of the flame 600, in accordance with the second embodiment of the present disclosure. FIG. 9C illustrates the plurality of pixels 910 associated with the flame 600, in accordance with the second embodiment of the present disclosure.

In some embodiments, the flame detection system 100 is configured to determine the location of the flame 600 within the FoV 116. In some embodiments, the one or more processors 106 is configured to determine a vertical line 906 between a tip Y-coordinate 602 and a base Y-coordinate 604 of the flame 600. Further, the one or more processors 106 may be configured to determine a horizontal line 908 between the left-most X-coordinate 608 and the right-most X-coordinate 606 of the flame 600. Further, the one or more processors 106 may be configured to determine an intersection point of the vertical line 906 and the horizontal line 908. Further, the one or more processors 106 may be configured to associate the intersection point as the center pixel 912.

In some embodiments, the one or more processors 106 is configured to determine midpoint (M1) coordinates 904 between the tip Y-coordinate 602 and the base Y-coordinate 604 of the flame source from the previous frame. Further, the one or more processors 106 may be configured to determine a midpoint (M2) coordinates 904 between the left X-coordinate 608 and the right X-coordinate 606 of the flame source from the previous frame. Further, the one or more processors 106 may be configured to determine the midpoint (M1) coordinated are equal to the midpoint (M2) coordinates. Further, the one or more processors 106 may be configured to determine mark the midpoint (M1) coordinates 904 and the midpoint (M2) coordinates 904 as the center pixel 912 coordinate for the previous frame.

In some embodiments, the center of the flame 600 is calculated as the midpoint 904 of the boundaries formed by the extreme points of the flame 600. The one or more processors 106 may determine the midpoint 904 on each edge of the formed boundaries 902. The one or more processors 106 may further mark the determined midpoint 904. Further, the one or more processors 106 may join the midpoints 904 on the formed boundaries 902. Further, the point intersecting the midpoints 904 may be marked as the center of the flame 600.

In some embodiments, the one or more processors 106 may verify that the one or more pixels' 910 intensity at the center pixel 912 and the neighbouring pixels' 914 intensities may be equal. The one or more processors 106 may extract the pixel intensity values of the center pixel 912 and the immediate neighbouring pixels 914. The one or more processors 106 may compare the intensity of the center pixel 912 with the neighbouring pixels 914. The neighbouring pixels 914 may include the pixels directly above, below, to the left, and to the right of the center pixel 912. The center pixel 912 and the neighbouring pixels 914 may be shown in a grid format, representing the flame 600 in rows and columns.

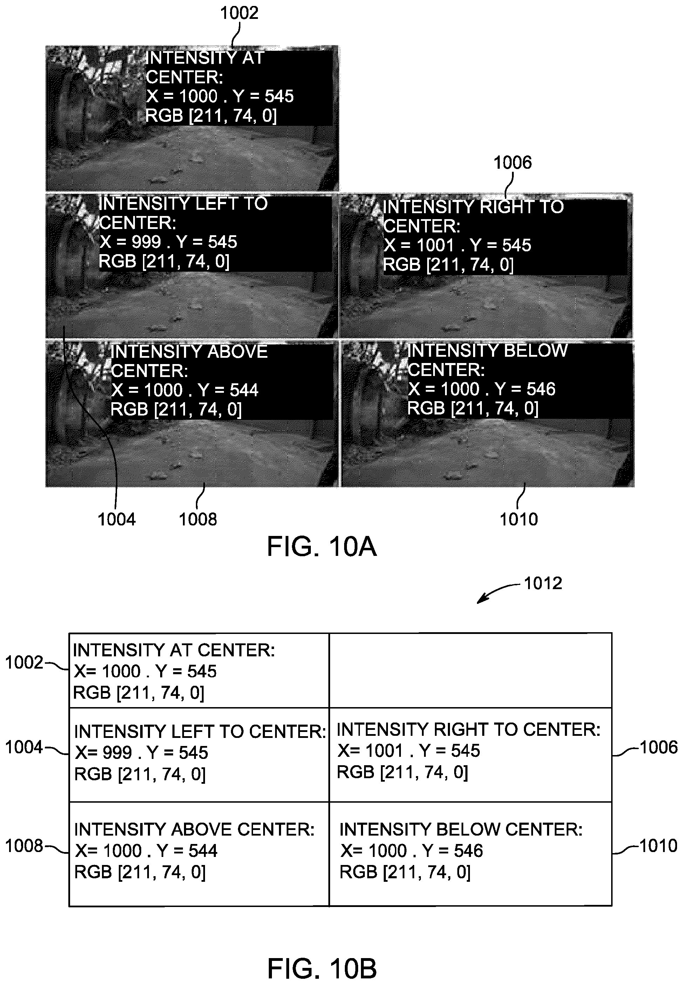

FIG. 10A illustrates the sequence of images 202 showing an intensity values of a center pixel 912 is equal to the intensities of each of the neighbouring pixels 914, in accordance with the second embodiment of the present disclosure. FIG. 10B illustrates a table 1012 showing the sequence of images 202 showing an intensity values of a center pixel 912 is equal to the intensities of each of the neighbouring pixels 914, in accordance with the second embodiment of the present disclosure.

In some embodiments, the one or more processors 106 may verify that the flame's center pixel 912 intensity is nearly same to the flame's neighbouring pixel 914 intensity. The sequence of images 202 may have flame's center pixel 912 at X coordinate= 1000, and Y coordinate= 545. The flame's center pixel 912 may have RGB intensity [211, 74, 0] (as shown in 1002). Further, the sequence of images 202 may have flame's neighbouring pixels (left to center) 914 at X coordinate= 999, and Y coordinate= 545. The flame's neighbouring pixel 914 may have RGB intensity [211, 74, 0] (as shown in 1004). Further, the sequence of images 202 may have flame's neighbouring pixels (right to center) 914 at X coordinate= 1001, and Y coordinate= 545. The flame's neighbouring pixel 914 may have RGB intensity [211, 74, 0] (as shown in 1006). Further, the sequence of images 202 may have flame's neighbouring pixels (above center) 914 at X coordinate= 1000, and Y coordinate= 544. The flame's neighbouring pixel 914 may have RGB intensity [211, 74, 0] (as shown in 1008). Thereafter, the sequence of images 202 may have flame's neighbouring pixels (below center) 914 at X coordinate= 1000, and Y coordinate= 546. The flame's neighbouring pixel 914 may have RGB intensity [211, 74, 0] (as shown in 1010).

In some embodiments, the verification process may confirm that the flame's center pixel 912 at coordinates (1000, 545) with the intensity of RGB = [211, 74, 0] is consistent with the immediate neighbouring pixels 914. Each flame's neighbouring pixel 914 (left, right, above, and below) may have the same RGB intensity.

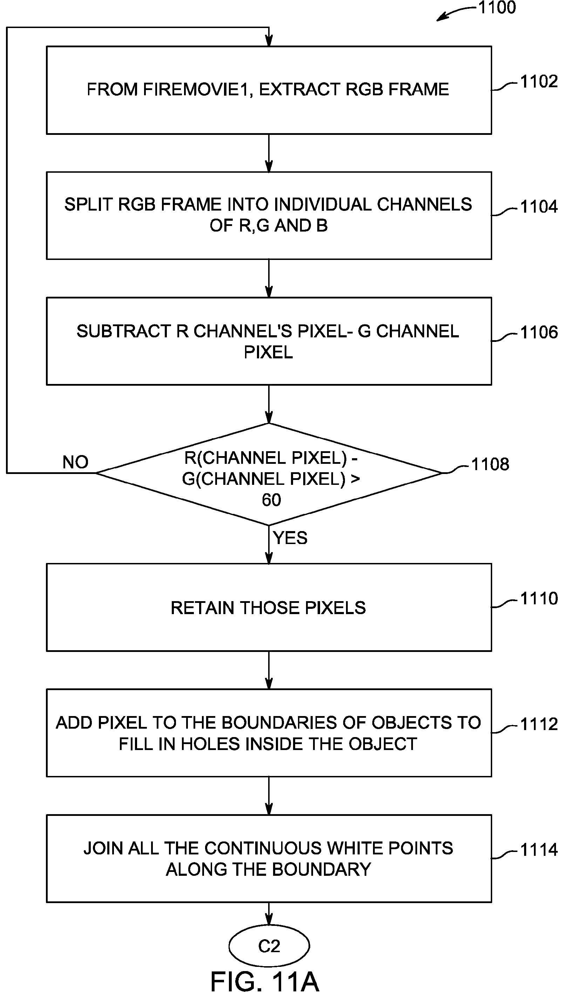

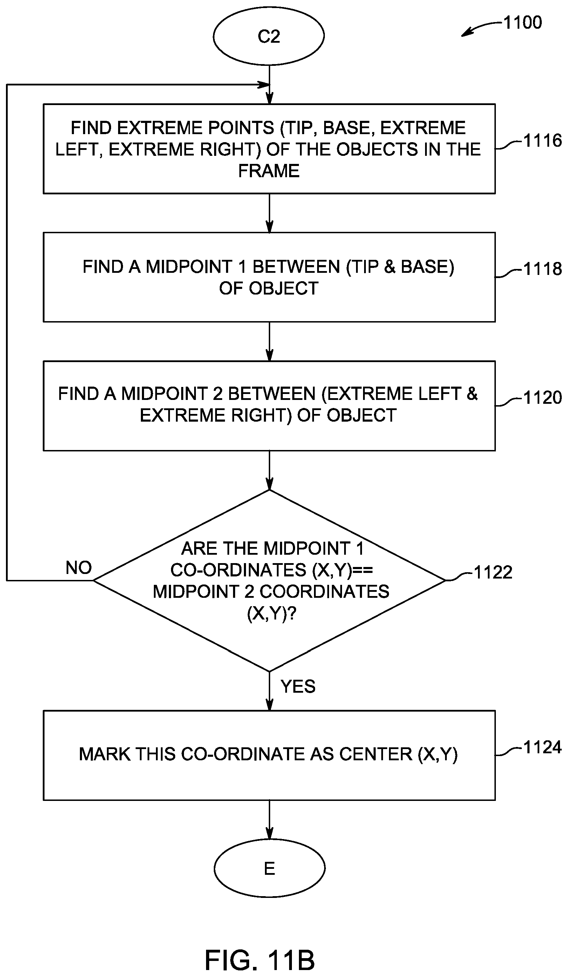

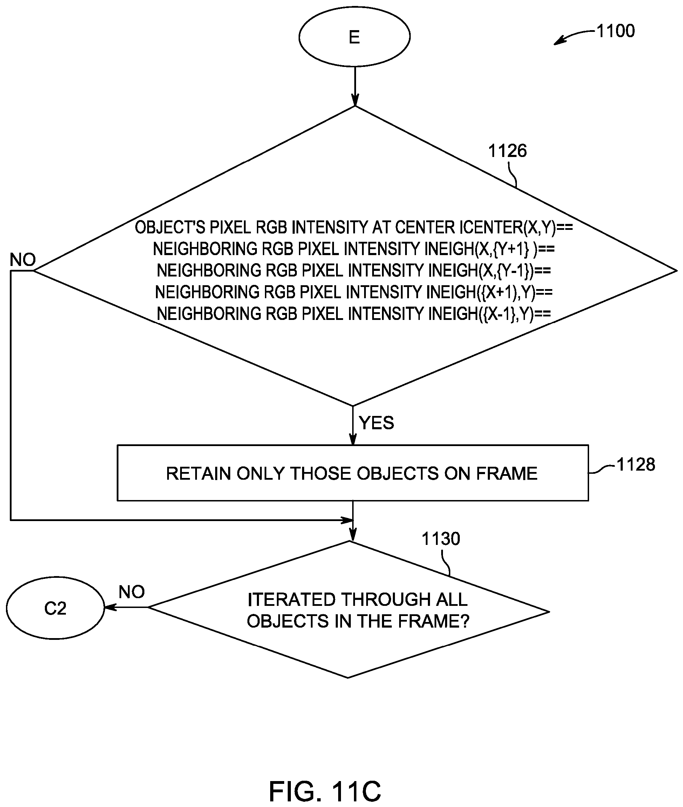

FIG. 11A illustrates a flowchart 1100 showing a method to contour the sequence of images 202, in accordance with the second embodiment of the present disclosure. FIG. 11B illustrates a flowchart 1100 showing a method to determine the center pixel 912 of the plurality of pixels 910 associated with the flame 600 within the FoV 116 for at least one of the sequence of images 202, in accordance with the second embodiment of the present disclosure. FIG. 11C illustrates a flowchart 1100 showing a method to identify the location of the flame 600, in accordance with the second embodiment of the present disclosure.

At operation 1102, from the FireMovie1, the one or more processors 106 may extract the RGB frame. In some embodiments, the one or more processors 106 may extract the RGB frame from the folder named FireMovie1. Extracting the RGB frame from the folder named FireMovie1may initialize the process by obtaining a single frame from the video sequence stored in the FireMovie1 folder. The extracted RGB frame may serve as the basis for image processing and analysis.

At operation 1104, the one or more processors 106 may split the RGB frame into the one or more channels. The one or more channels may correspond to the R channel 502, the G channel 504, and the B channel 506. Splitting the RGB frame into the one or more channel may allow for individual analysis of each color channel. The one or more colors may provide unique information about the presence and intensity of the flame 600.

At operation 1106, the one or more processors 106 may subtract the G channel 504 pixel values from the R channel 502 pixel values. The one or more processors 106 may identify potential fire regions based at least on color intensity differences. For each pixel in the sequence of images 202, subtract the Green channel 504 pixel values from the Red channel 502 pixel values. In some embodiments, the flame 600 may have a higher intensity in the red channel 502 compared to the green channel 504. Subtracting the red channel 502 pixel values and the green channel 504 pixel values may highlight potential fire regions.

At operation 1108, determine whether the difference (R channel pixel values- G channel pixel values) 508 may exceed the predefined threshold or not. The predefined threshold may correspond to 60. If the difference (R channel pixel values- G channel pixel values) 508 may not exceed the predefined threshold, from the FireMovie1, the one or more processors 106 may extract the RGB frame, at step 1102. Determining whether the difference (R channel pixel values- G channel pixel values) 508 may exceed the predefined threshold or not may filter out non-fire regions based at least on the color intensity difference.

At operation 1110, retain the pixel values whose difference (R channel pixel values- G channel pixel values) 508 may exceed the predefined threshold. Retaining the pixel values whose difference (R channel pixel values- G channel pixel values) 508 may exceed the predefined threshold may isolate the pixels that is likely part of the fire region.

At operation 1112, the one or more processors 106 may add the one or more pixels to the boundaries of an object to fill in the holes inside the object. The process of adding the one or more pixels to the boundaries of the object to fill in the holes inside the object is called as Dilation. Dilation may enhance continuity and integrity of the detected fire regions. Dilation may add the one or more pixels to the boundaries of the object, filling in small holes and gaps within the detected fire regions. Dilation may help in creating more solid and connected areas representing the fire.

At operation 1114, the one or more processors 106 may define the boundary of the detected fire regions. The one or more processors 106 may join all the continuous white points along the boundary of the object. Joining all the continuous white points along the boundary of the object may correspond to contour. The one or more processors 106 may use the contour detection algorithm to join all the continuous white points along the boundary of the detected fire regions. Contours are created by tracing edges of the connected regions, effectively outlining the fire's shape.

At operation 1116, the one or more processors 106 may find extreme points of the object in the frame. The extreme points may correspond to the tip Y-coordinate 602, the base Y-coordinate 604, the right-most X-coordinate 606, and the left-most X-coordinate 608. The tip Y-coordinate 602 may correspond to the highest point of the fire region. The base Y-coordinate 604 may correspond to the lowest point of the fire region. The right-most X-coordinate 606 may correspond to the rightmost point of the fire region. The left-most X-coordinate 608 may correspond to the leftmost point of the fire region. The extreme points may define the boundary of the flame 600, and assessing the size of the flame 600.

At operation 1118, the one or more processors 106 may determine the midpoint 1 between the tip Y-coordinate 602, and the base Y-coordinate 604 of the flame 600. The midpoint 1 may help in determining the vertical center of the flame 600. The midpoint 1 may provide an average position between the tip Y-coordinate 602 and the base Y-coordinate 604.

At operation 1120, the one or more processors 106 may determine the midpoint 2 between the left-most X-coordinate 608, and the right-most X-coordinate 606 of the flame 600. The midpoint 2 may help in determining the horizontal center of the flame 600. The midpoint 2 may provide an average position between the right X-coordinate 606 and the left X-coordinate 608.

At operation 1122, the one or more processors 106 may determine whether the midpoint 1 coordinates (X, Y) 904 is equal to the midpoint 2 coordinates (X, Y) 904. If the midpoint 1 coordinates (X, Y) 904 may not be equal to the midpoint 2 coordinates (X, Y) 904, the one or more processors 106 may find extreme points of the object in the frame (as shown at step 1116). The comparison may ensure accuracy of the detected center of the flame 600. If the midpoint 1 coordinates (X, Y) 904 may not match the midpoint 2 coordinates (X, Y) 904, indicating that the center may not be correctly identified. The left-most X-coordinate 608 may re-determine the extreme points and the center. At operation 1124, the one or more processors 106 may mark the coordinate as center (X, Y), if the midpoint 1 coordinates (X, Y) 904 may match the midpoint 2 coordinates (X, Y) 904.

At operation 1126, the one or more processors 106 may determine whether the object's pixel RGB intensity at center (X, Y) pixel 912 is equal to the neighbouring RGB pixels' 914 intensities (X, {Y+1}). Further, the one or more processors 106 may determine whether the object's pixel RGB intensity at center (X, Y) pixel 912 is equal to the neighbouring RGB pixel intensity 912 (X, {Y-1}). Further, the one or more processors 106 may determine whether the object's pixel RGB intensity at the center (X, Y) pixel 912 is equal to the neighbouring RGB pixels' 914 intensities ({X+1}, Y). Further, the one or more processors 106 may determine whether the object's pixel RGB intensity at the center (X, Y) pixel 912 is equal to the neighbouring RGB pixels' 914 intensities ({X-1}, Y).

At operation 1128, the one or more processors 106 may retain the object on frame that may meet the intensity consistency criteria. In some embodiments, the one or more processors 106 may filter out the object that may not exhibit the uniform intensity. The one or more processors 106 may ensure that only valid fire regions are retained. At operation 1130, the one or more processors 106 may determine whether the one or more processors 106 may iterate through all the object in the frame. In some embodiments, the one or more processors 106 may ensure that the frame is thoroughly analyzed, with all the detected object.

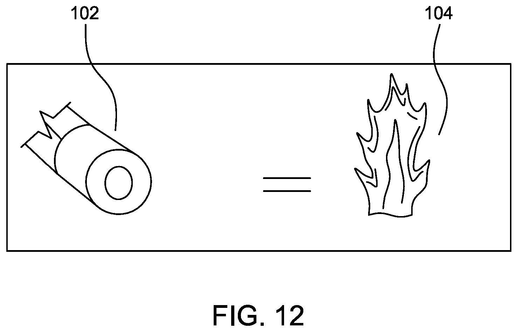

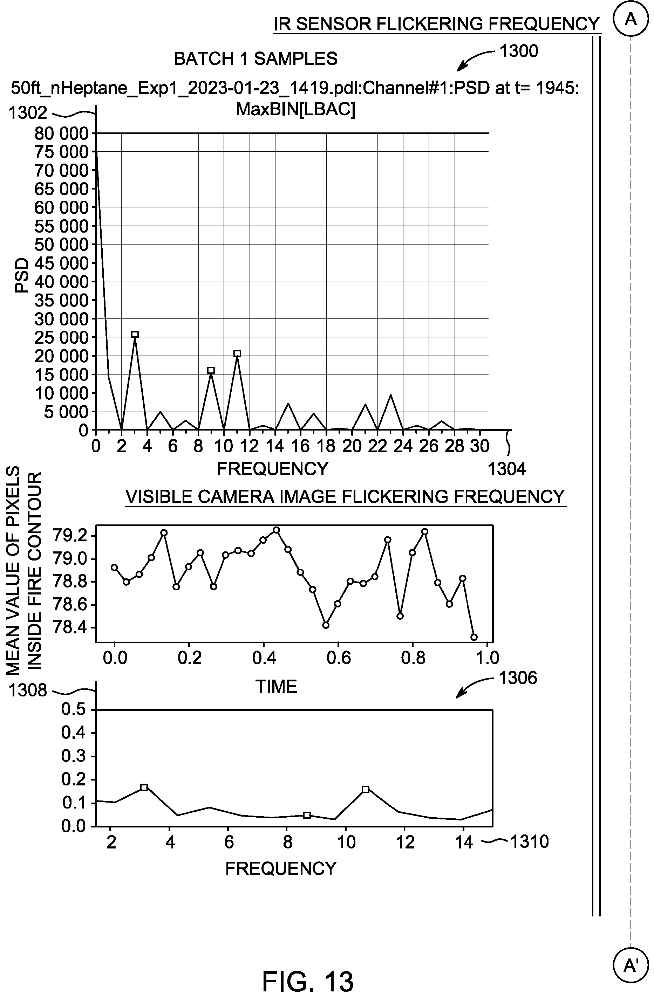

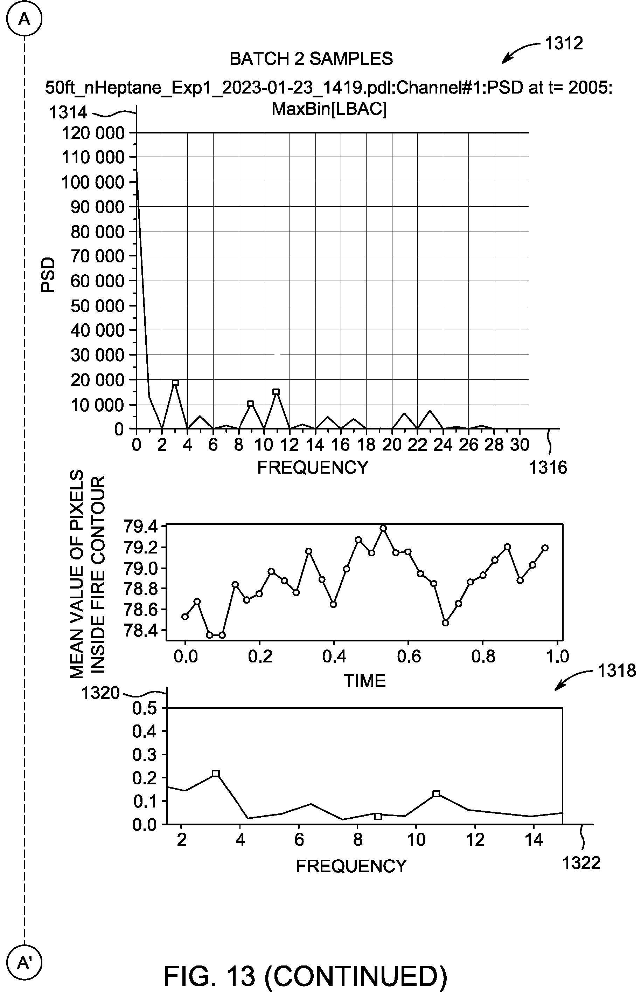

FIG. 12 illustrates aligning a flickering frequency of the at least one flame detector 102 to a flickering frequency of the sequence of images 202 captured by the at least one image capturing device 104, in accordance with a third embodiment of the present disclosure. FIG. 13 illustrates a plurality of graphs showing the flickering frequency of the at least one flame detector 102 and the flickering frequency of the sequence of images 202 captured by the at least one image capturing device 104, in accordance with the third embodiment of the present disclosure.

In some embodiments, to ensure that the flickering frequency of the IR sensor 102 (also corresponding to at least one flame detector 102) may align with the at least one image capturing device 104 flickering frequency, the flame detection system 100 may capture data at a specified rate, apply a Fourier analysis to convert the data from time domain to frequency domain, and then the flame detection system 100 may compare result to ensure synchronization. In some embodiments, The IR sensor 102 data is captured at a rate of 60 samples per second (60 Hz). The Fourier analysis may correspond to a Fast Fourier Transform (FFT).

The Fourier analysis may be applied to the captured IR sensor 102 data. The Fourier analysis may convert signal from original time domain into frequency domain. In the time domain, the signal may be represented by variations in amplitude over time. The FFT may transform the time domain into the frequency domain. In the frequency domain the signal may be represented by the frequency and the amplitudes. The flame detection system 100 may compute the FFT of the captured data, resulting in a spectrum of frequencies. Each frequency may represent a possible flickering frequency of the IR sensor 102. In some embodiments, in the spectrum of frequencies obtained from the FFT, the flame detection system 100 may identify peak frequencies. The peak frequencies may correspond to the dominant flickering frequencies of the IR sensor 102.

In some embodiments, the flame detection system 100 may perform a frequency analysis on the at least one image capturing device 104 data to determine the flickering frequencies. The dominant frequencies from the at least one image capturing device 104 may be compared against the dominant frequencies obtained from the IR sensor 102.

In one example, the graph 1300 may represent the flickering frequency of the IR sensor 102 of the previous frame. The graph 1300 may correspond to a graph between PSD (as shown in 1302) and frequency (as shown in 1304). Further, the graph 1306 may represent the flickering frequency of the at least one image capturing device 104 of the previous frame. The graph 1306 may correspond to a graph between mean value of pixels inside fire contour (as shown in 1308) and the frequency (as shown in 1310). The flickering frequency of the IR sensor 102 and the at least one image capturing device 104 may be aligned at 3 hertz (Hz) and 11 Hz frequency.

In another example, the graph 1312 may represent the flickering frequency of the IR sensor 102 of the current frame. The graph 1312 may correspond to a graph between PSD (as shown in 1302) and frequency (as shown in 1304). Further, the graph 1318 may represent the flickering frequency of the at least one image capturing device 104 of the previous frame. The graph 1318 may correspond to a graph between mean value of pixels inside fire contour (as shown in 1320) and the frequency (as shown in 1322). The flickering frequency of the IR sensor 102 and the at least one image capturing device 104 may be aligned at 3 hertz (Hz) and 11 Hz frequency.

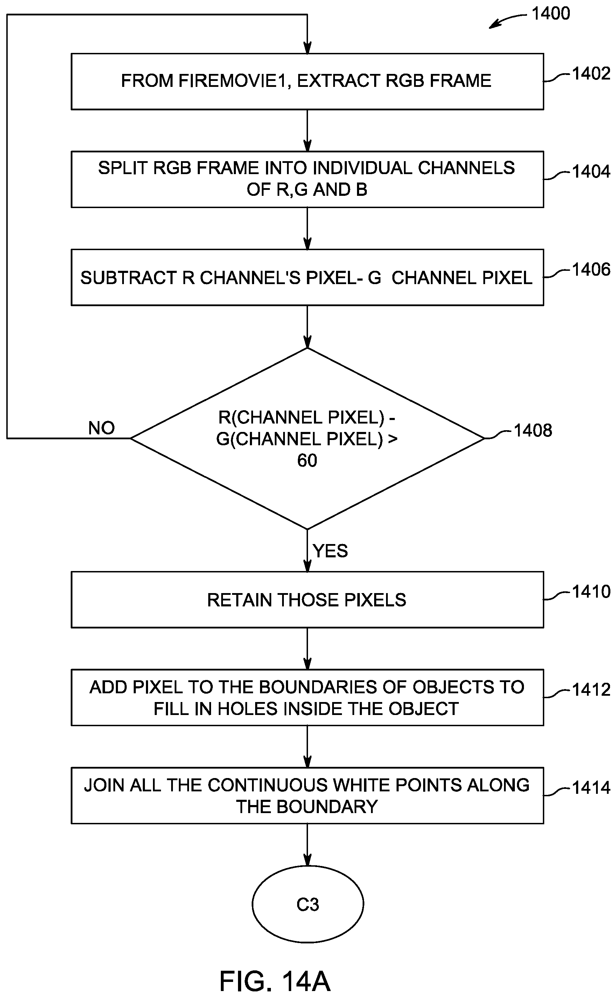

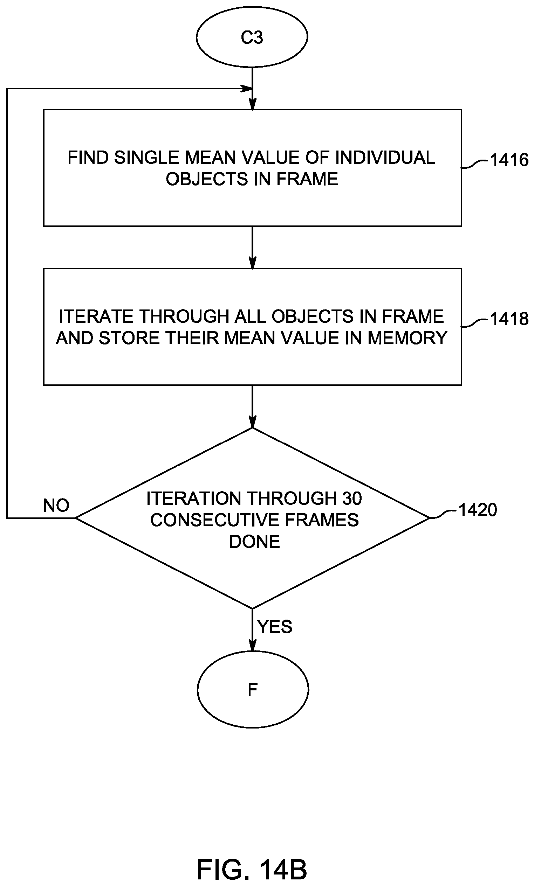

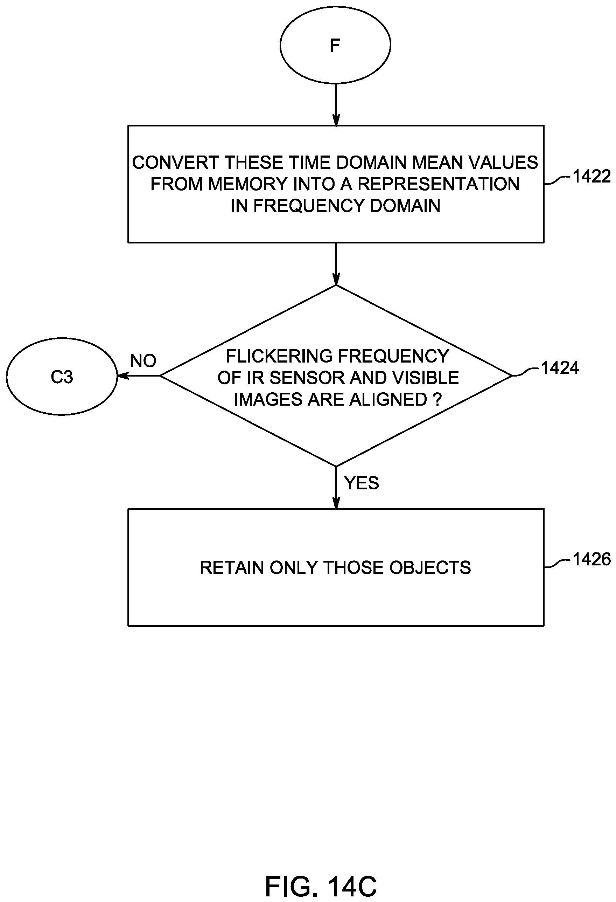

FIG. 14A illustrates a flowchart 1400 showing a method to contour the sequence of images 202, in accordance with the third embodiment of the present disclosure. FIG. 14B illustrates a flowchart 1400 showing the steps to determine the flickering frequency of the at least one flame detector 102 and the flickering frequency of the sequence of images 202, in accordance with the third embodiment of the present disclosure. FIG. 14C illustrates a flowchart 1400 showing a method to identify the location of the flame 600, in accordance with the third embodiment of the present disclosure.

At operation 1402, from the FireMovie1, the flame detection system 100 may extract the RGB frame. In some embodiments, the flame detection system 100 may extract the RGB frame from the folder named FireMovie1. Extracting the RGB frame from the folder named FireMovie1may initialize the process by obtaining a single frame from the video sequence stored in the FireMovie1 folder. The extracted RGB frame may serve as the basis for image processing and analysis.

At operation 1404, the flame detection system 100 may split the RGB frame into the one or more channels. The one or more channels may correspond to the R channel 502, the G channel 504, and the B channel 506. Splitting the RGB frame into the one or more channel may allow for individual analysis of each color channel. The one or more colors may provide unique information about the presence and intensity of the flame 600.

At operation 1406, the flame detection system 100 may subtract the G channel 504 pixel values from the R channel 502 pixel values. The flame detection system 100 may identify potential fire regions based at least on color intensity differences. For each pixel in the sequence of images 202, subtract the Green channel 504 pixel values from the Red channel 502 pixel values. In some embodiments, the flame 600 may have a higher intensity in the red channel 502 compared to the green channel 504. Subtracting the red channel 502 pixel values and the green channel 504 pixel values may highlight potential fire regions.

At operation 1408, determine whether the difference (R channel pixel values- G channel pixel values) 508 may exceed the predefined threshold or not. The predefined threshold may correspond to 60. If the difference (R channel pixel values- G channel pixel values) 508 may not exceed the predefined threshold, from the FireMovie1, the flame detection system 100 may extract the RGB frame, at step 1402. Determining whether the difference (R channel pixel values- G channel pixel values) 508 may exceed the predefined threshold or not may filter out non-fire regions based at least on the color intensity difference.

At operation 1410, retain the pixel values whose difference (R channel pixel values- G channel pixel values) 508 may exceed the predefined threshold. Retaining the pixel values whose difference (R channel pixel values- G channel pixel values) 508 may exceed the predefined threshold may isolate the pixels that may be likely part of the fire region.

At operation 1412, the flame detection system 100 may add the one or more pixels to the boundaries of an object to fill in the holes inside the object. The process of adding the one or more pixels to the boundaries of the object to fill in the holes inside the object is called as Dilation. Dilation may enhance continuity and integrity of the detected fire regions. Dilation may add the one or more pixels to the boundaries of the object, filling in small holes and gaps within the detected fire regions. Dilation may help in creating more solid and connected areas representing the fire.

At operation 1414, the flame detection system 100 may define the boundary of the detected fire regions. The flame detection system 100 may join all the continuous white points along the boundary of the object. Joining all the continuous white points along the boundary of the object may correspond to contour. The flame detection system 100 may use a contour detection algorithm to join all the continuous white points along the boundary of the detected fire regions. Contours may be created by tracing edges of the connected regions, effectively outlining the fire's shape.

At operation 1416, the flame detection system 100 may find single mean value of the individual object in the frame. In some embodiments, for each object in the frame, the flame detection system 100 may calculate average value of the pixel intensities. The mean value may represent brightness or the intensity of the object. At operation 1418, the flame detection system 100 may iterate through every object in the frame and may store the mean value in the memory. The flame detection system 100 may compute and store the mean value of each object in the memory. The stored mean value may be used for time domain to frequency domain conversion.

At operation 1420, the flame detection system 100 may determine whether the flame detection system 100 may iterate through the 30 consecutive frame. The flame detection system 100 may check if the flame detection system 100 may be iterated through the 30 consecutive frame. Iterating over the 30 frame may provide a dataset for frequency analysis. The frequency analysis may capture potential variations over time.

At operation 1422, the flame detection system 100 may convert the time domain mean value from the memory into a representation in the frequency domain. In some embodiments, the flame detection system 100 may apply the Fourier Transform to the stored mean values. The conversion may identify the dominant frequencies of the intensity variations. The conversion may further represent the flickering frequencies of the object.

At operation 1424, the flame detection system 100 may determine whether the frequency of the IR sensor 102 and the at least one image capturing device 104 is aligned or not. In some embodiments, the flame detection system 100 may compare the frequency domain data obtained from the IR sensor 102 and the at least one image capturing device 104. The flame detection system 100 may further check if the dominant frequencies may match within a specified tolerance range. At operation 1426, the flame detection system 100 may retain the object with the aligned frequency. The flame detection system 100 may filter out the object whose flickering frequencies do not align with those of the IR sensor 102.

The present disclosure offers significant advantages by integrating the at least one image capturing device 104 with the at least one flame detector 102, enabling precise localization of the flame source. The integration allows for real-time image capture and processing, making it possible to mark the exact location of the flame 600 directly on the sequence of images 202. The precise identification of the flame's 600 location greatly aids operators in quickly and accurately locating the flame source, enhancing safety and efficiency during emergency situations. The present disclosure also reduces false alarms and improves response time.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A flame detection system comprising:
at least one flame detector configured to generate a data corresponding to detection of a presence of a flame within a field of view (FoV);
at least one image capturing device operationally coupled to the at least one flame detector, wherein the at least one image capturing device is configured to capture a sequence of images of the flame within the FoV, wherein a plurality of pixels of each image of the sequence of images are associated with the flame within the FoV; and
one or more processors communicatively coupled to the at least one flame detector and the at least one image capturing device, wherein the one or more processors are configured to identify a location of the flame within the FoV by:
determining a base Y-coordinate, a tip Y-coordinate, a left-most X-coordinate, and a right-most X-coordinate of the plurality of pixels associated with the flame within the FoV for each of the sequence of images;
determining that the base Y-coordinate of a most current image of the sequence of images varies less than a predefined limit of height of the flame as compared to a previous image of the sequence of images; and
determining that the tip Y-coordinate of the most current image of the sequence of images varies more than the predefined limit of height of the flame as compared to the previous image of the sequence of images, or the left-most X-coordinate or the right-most X-coordinate of the most current image of the sequence of images varies more than a predefined limit of width of the flame as compared to the previous image of the sequence of images.

2. The flame detection system of claim 1, wherein the predefined limit of the height of the flame corresponds to 2% of the height of the flame and the predefined limit of the width of the flame corresponds to 2% of the width of the flame.

3. The flame detection system of claim 1, wherein the one or more processors are further configured to:
store the sequence of images in a rolling buffer for a predefined frame per second (FPS) within a memory;
determine whether the flame is present within an image of the sequence of images stored in the rolling buffer;
save the image of the sequence of images stored in the rolling buffer within the memory as a previous frame, upon determining the flame is present within the image of the sequence of images; and
store another sequence of images received from the at least one image capturing device in the rolling buffer for the predefined FPS within the memory as a current frame.

4. The flame detection system of claim 3, wherein the predefined FPS defines a range of 30FPS to 60FPS.

5. The flame detection system of claim 3, wherein the one or more processors are configured to determine the base Y-coordinate, the tip Y-coordinate, the left-most X-coordinate, and the right-most X-coordinate by:
extracting red green blue (RGB) frames from the previous image and the most current image of the sequence of images;
splitting the RGB frame of the previous image and the most current image into an R channel, a G channel, and a B channel;
subtracting one or more pixels of the G channel from one or more pixels of the R channel;
determining that a difference of a pixel value between the R channel and the G channel is greater than 60;
dilating the sequence of images from the previous frame and the current frame by adding the one or more pixels of the R channel within boundaries of the flame; and
contouring the dilated sequence of images by joining the one or more pixels of the R channel.

6. The flame detection system of claim 3, wherein the plurality of pixels of the sequence of images corresponds to one or more pixels of the current frame and the one or more pixels of the previous frame.

7. The flame detection system of claim 1, wherein the data corresponds to an Infrared (IR) sensor data that is captured at a rate of 60 samples per second.

8. The flame detection system of claim 1, wherein the flame detection system is further configured to indicate on at least one image of the sequence of images the location of the flame within the FoV.

9. A flame detection system comprising:
at least one flame detector configured to generate a data corresponding to detection of a presence of a flame within a field of view (FoV);
at least one image capturing device operationally coupled to the at least one flame detector, wherein the at least one image capturing device is configured to capture a sequence of images of the flame within the FoV, wherein a plurality of pixels of each image of the sequence of images are associated with the flame within the FoV; and
one or more processors communicatively coupled to the at least one flame detector and the at least one image capturing device, wherein the one or more processors are configured to identify a location of the flame within the FoV by:
determining a center pixel of the plurality of pixels associated with the flame within the FoV for at least one of the sequence of images;
determining an intensity of the center pixel and intensities of neighbouring pixels, wherein the neighbouring pixels comprise a pixel that is to the left of the center pixel, a pixel that is to the right of the center pixel, a pixel that is directly below the center pixel, and a pixel that is directly above the center pixel; and
determining that an intensity value of the center pixel is equal to the intensities of each of the neighbouring pixels.

10. The flame detection system of claim 9, wherein the one or more processors are further configured to determine coordinates for the center pixel of the plurality of pixels associated with the flame within the FoV for the at least one of the sequence of images by:
determining a vertical line between a tip Y-coordinate and a base Y-coordinate of the flame;
determining a horizontal line between a left-most X-coordinate and a right-most X-coordinate of the flame;
determining an intersection point of the vertical line and the horizontal line; and
associating the intersection point as the center pixel.

11. The flame detection system of claim 10, wherein the one or more processors are configured to determine the base Y-coordinate, the tip Y-coordinate, the left-most X-coordinate, and the right-most X-coordinate by:
extracting red green blue (RGB) frames from the previous image and the most current image of the sequence of images;
splitting the RGB frame of the previous image and the most current image into an R channel, a G channel, and a B channel;
subtracting one or more pixels of the G channel from one or more pixels of the R channel;
determining that a difference of a pixel value between the R channel and the G channel is greater than 60;
dilating the sequence of images from a previous frame and a current frame by adding the one or more pixels of the R channel within boundaries of the flame; and
contouring the dilated sequence of images by joining the one or more pixels of the R channel.

12. The flame detection system of claim 9, wherein the plurality of pixels of the sequence of images corresponds to one or more pixels of the current frame and the one or more pixels of the previous frame.

13. The flame detection system of claim 9, wherein the data corresponds to an Infrared (IR) sensor data that is captured at a rate of 60 samples per second.

14. The flame detection system of claim 9, wherein the flame detection system is further configured to indicate on at least one image of the sequence of images the location of the flame within the FoV.

15. A flame detection system comprising:
at least one flame detector configured to generate a data corresponding to detection of a presence of a flame within a field of view (FoV);
at least one image capturing device operationally coupled to the at least one flame detector, wherein the at least one image capturing device is configured to capture a sequence of images of the flame within the FoV, wherein a plurality of pixels of each image of the sequence of images are associated with the flame within the FoV; and
one or more processors communicatively coupled to the at least one flame detector and the at least one image capturing device, wherein the one or more processors are configured to identify a location of the flame within the FoV by:
determining a flickering frequency of the at least one flame detector is equal to a flickering frequency of the sequence of images captured by the at least one image capturing device.
